(19) Europäisches Patentamt
European Patent Office
Office européen des brevets

(11) **EP 4 564 950 A1**

(12) **EUROPEAN PATENT APPLICATION**
published in accordance with Art. 153(4) EPC

(43) Date of publication:
**04.06.2025 Bulletin 2025/23**

(21) Application number: **23851419.4**

(22) Date of filing: **28.06.2023**

(51) International Patent Classification (IPC):
***H04W 72/00*** (2023.01)

(52) Cooperative Patent Classification (CPC):
**H04W 72/00**

(86) International application number:
**PCT/CN2023/103350**

(87) International publication number:
**WO 2024/032192 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210970213**

(71) Applicant: **Huawei Technologies Co., Ltd.
Shenzhen, Guangdong 518129 (CN)**

(72) Inventors:
• **WANG, Zhonglong
Shenzhen, Guangdong 518129 (CN)**

• **XIE, Xinqian
Shenzhen, Guangdong 518129 (CN)**
• **SHAO, Jiafeng
Shenzhen, Guangdong 518129 (CN)**
• **YE, Wei
Shenzhen, Guangdong 518129 (CN)**
• **LI, Hantao
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND RELATED APPARATUS**

(57)     This application provides a communication method and a related apparatus. The method includes: A first device determines a first time domain resource, where the first time domain resource includes M time domain symbols, M is an integer greater than 1, and an interval between any two of the M time domain symbols is greater than or equal to one time domain symbol. The first device sends a first signal on the M time domain symbols, where a signal that is in the first signal and that is located on a time domain symbol a is a product of a second signal and an element a in a mask sequence, a length of the mask sequence is M, the time domain symbol a is a symbol whose sequence number is a in the M time domain symbols, the element a is an element whose sequence number is a in the mask sequence, and a is an integer greater than or equal to 0 and less than M. According to the solutions in embodiments of this application, a low-velocity target can be detected.

A first device determines a first time domain resource — S501

The first device sends a first signal on $M$ time domain symbols — S502

FIG. 5

EP 4 564 950 A1

**Description**

This application claims priority to Chinese Patent Application No. 202210970213.1, filed with the China National Intellectual Property Administration on August 12, 2022 and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

Integrated communication and sensing is a key technology in a next generation wireless communication network, aims to integrate two functions, that is, wireless communication and sensing, into a same system, and implements sensing functions such as positioning, detection, imaging, and identification of a target by using various propagation characteristics of a radio signal, to obtain surrounding physical environment information, explore a communication capability, and enhance user experience.

A base station performs sensing by sending a sensing signal and receiving an echo signal obtained by reflecting the sensing signal by a target in an environment. A delay of the echo signal relative to the sent sensing signal reflects a range from the target, and a Doppler shift of the echo signal relative to the sent sensing signal reflects a velocity of the target.

In a networking scenario, all base stations use a same time-frequency resource for sensing. Any base station A is used as an example. When performing sensing, the base station A sends a sensing signal, and receives an echo signal of the sensing signal sent by the base station A. In addition, because all the base stations use the same time-frequency resource for sensing, the base station A further receives noise and a sensing signal (that is, an inter-base station interference signal) that is sent by another base station. Currently, sensing signals sent by each base station within coherent processing time are the same. Therefore, the sensing signal (that is, the inter-base station interference signal) sent by the another base station and received by the base station A is almost unchanged within the coherent processing time. Consequently, a low-velocity target is shielded by the interference signal, and cannot be effectively detected.

**SUMMARY**

This application provides a communication method and a related apparatus, to detect a low-velocity target.

According to a first aspect, this application provides a communication method. The method includes:

A first device determines a first time domain resource, where the first time domain resource includes $M$ time domain symbols, $M$ is an integer greater than 1, and an interval between any two of the $M$ time domain symbols is greater than or equal to one time domain symbol; and

the first device sends a first signal on the $M$ time domain symbols, where a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

In this application, in a networking scenario, different devices use different mask sequences and different second signals. The first device is used as an example. The first device sends the first signal on the $M$ time domain symbols, where the signal that is in the first signal and that is located on the time domain symbol $a$ is the product of the second signal and the element $a$ in the mask sequence. Different from a manner in which the same second signal is sent on the $M$ time domain symbols in the first time domain resource, when the first device performs sensing processing, an interference signal of another device may fall at a non-zero frequency/non-low frequency of a velocity spectrum, corresponding to a non-zero velocity/non-low velocity. In this way, the first device detects a low-velocity target.

In a possible implementation, the method further includes:
The first device sends the second signal on a second time domain resource, where the first time domain resource and the second time domain resource do not overlap.

In this implementation, the first device sends the first signal and the second signal in a time division multiplexing manner. Therefore, the first device may detect a zero-velocity or low-velocity target based on the first signal, and detect a high-velocity target based on the second signal.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, that the first device sends a first signal on the $M$ time domain symbols includes:
The first device sends the first signal on a first frequency domain resource and the $M$ time domain symbols.

The method further includes:
The first device sends a third signal or the second signal on a second frequency domain resource and the $M$ time domain symbols.

The second frequency domain resource and the first frequency domain resource do not overlap.

In this implementation, the first device sends the first signal and the second signal (or the third signal) in a frequency division multiplexing manner. Therefore, the first device may detect a zero-velocity or low-velocity target based on the first signal, and detect a high-velocity target based on the second signal (or the third signal).

In a possible implementation, the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

In a possible implementation, the column $i$ or the row $i$ includes $N$ elements, $N$ is an integer greater than 1, $N$ is greater than or equal to $M$, and $M$ elements in the mask sequence are $M$ of the $N$ elements. Herein, that the column $i$ or the row $i$ includes $N$ elements may be understood as that a length of the column $i$ or the row $i$ is $N$.

In a possible implementation, in the first time domain resource, an absolute value of a difference between symbol sequence numbers of any two adjacent time domain symbols in the $M$ time domain symbols is the same. The element $a$ in the mask sequence is an element $a$ in the $N$ elements, and the element $a$ in the $N$ elements is an element whose sequence number is $a$ in the $N$ elements.

In a possible implementation, the column $i$ or the row $i$ includes $N$ elements, $N$ is an integer greater than 1, $N$ is less than $M$, $M$ elements in the mask sequence include at least two same elements, the at least two same elements are elements in the $N$ elements, and the $M$ elements include all or some of the $N$ elements.

In a possible implementation, in the first time domain resource, an absolute value of a difference between symbol sequence numbers of any two adjacent time domain symbols in the $M$ time domain symbols is the same. The column $i$ or the row $i$ includes $N$ elements, $N$ is an integer greater than 1, $N$ is less than $M$, the element $a$ in the mask sequence is an element $b$ in the $N$ elements, and the element $b$ is an element whose sequence number is $b$ in the $N$ elements; and

$$b = a \bmod N,$$

where
mod represents a modulo operation.

In a possible implementation, symbol sequence numbers of the $M$ time domain symbols in the first time domain resource belong to a first set, and the first set satisfies:

$$\mathbf{R} = \{T \times e + z \mid e \in \mathbf{S}, \mathbf{S} \subseteq \{0,1,2,\dots\}\},$$

where
$\mathbf{R}$ represents the first set, T is a positive integer, a difference between symbol sequence numbers of any two of the $M$ time domain symbols in the first time domain resource is an integer multiple of T, z is an offset of a 1st time domain symbol in the $M$ time domain symbols relative to a 1st time domain symbol in the first time domain resource, $\mathbf{S}$ represents a second set, the second set is a subset of a natural number set, and a quantity of elements in the second set is $M$.

The element $a$ in the mask sequence is the element $b$ in the $N$ elements included in the column $i$ or the row $i$, and the element $b$ is the element whose sequence number is $b$ in the $N$ elements, where

$$b = \mathrm{U}[a] \bmod N$$

U represents a first sequence, the first sequence is a sequence formed by elements in the second set in ascending order, and U[$a$] is an element whose sequence number is $a$ in the first sequence.

In a possible implementation, the first matrix is a Vandermonde matrix.

In a possible implementation, the Vandermonde matrix is a discrete Fourier transform DFT matrix.

In a possible implementation, when the first matrix is the DFT matrix, the column $i$ or the row $i$ satisfies:

$$w_i[n] = \exp\left(j\frac{2\pi}{N}in\right), n = 0,1,2,\dots,N-1,$$

where
$N$ is a quantity of elements in the column $i$, and $i \in \{0, 1, 2, \dots, N\text{-}1\}$.

In a possible implementation, $N$ is 19 or a multiple of 19;

$N$ is 3 or a multiple of 3; or
$N$ is $2^6$ or $2^r$, and r is a positive integer not equal to 6.

In a possible implementation, the method further includes:

The first device receives a fourth signal on the $M$ time domain symbols, where the fourth signal is an echo signal of the first signal;
the first device receives a fifth signal on the second time domain resource, where the fifth signal is an echo signal of the second signal; and/or
the first device receives a sixth signal on the second frequency domain resource and the $M$ time domain symbols, where the sixth signal is an echo signal of the third signal or the second signal.

In a possible implementation, the method further includes:

The first device sends first information to a second device, where the first information indicates the second device to receive a signal based on the first information, and the first information includes at least one of the following information:

the first time domain resource, the first frequency domain resource, the second time domain resource, the second frequency domain resource, $i$, and $N$.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

According to a second aspect, this application provides a communication method. The method includes:

A second device receives first information from a first device, where the first information includes a first time domain resource, the first time domain resource includes $M$ time domain symbols, $M$ is an integer greater than 1, and an interval between any two of the $M$ time domain symbols is greater than or equal to one time domain symbol; and

the second device receives a first signal on the $M$ time domain symbols, where a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

In a possible implementation, the first information further includes a second time domain resource.

The method further includes:

The second device receives the second signal on the second time domain resource, where the first time domain resource and the second time domain resource do not overlap.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, the first information further includes a first frequency domain resource and a second frequency domain resource.

That the second device receives a first signal on the $M$ time domain symbols includes:

The second device receives the first signal on the first frequency domain resource and the $M$ time domain symbols.

The method further includes:

The second device receives a third signal or the second signal on the second frequency domain resource and the $M$ time domain symbols.

The second frequency domain resource and the first frequency domain resource do not overlap.

In a possible implementation, the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

In a possible implementation, the column $i$ or the row $i$ includes $N$ elements, $N$ is an integer greater than 1, $N$ is greater than or equal to $M$, and $M$ elements in the mask sequence are $M$ of the $N$ elements.

In a possible implementation, in the first time domain resource, an absolute value of a difference between symbol sequence numbers of any two adjacent time domain symbols in the $M$ time domain symbols is the same. The element $a$ in the mask sequence is an element $a$ in the $N$ elements, and the element $a$ in the $N$ elements is an element whose sequence number is $a$ in the $N$ elements.

In a possible implementation, the column $i$ or the row $i$ includes $N$ elements, $N$ is an integer greater than 1, $N$ is less than $M$, $M$ elements in the mask sequence include at least two same elements, the at least two same elements are elements in the $N$ elements, and the $M$ elements include all or some of the $N$ elements.

In a possible implementation, in the first time domain resource, an absolute value of a difference between symbol sequence numbers of any two adjacent time domain symbols in the $M$ time domain symbols is the same. The column $i$ or the row $i$ includes $N$ elements, $N$ is an integer greater than 1, $N$ is less than $M$, the element $a$ in the mask sequence is an element $b$ in the $N$ elements, and the element $b$ is an element whose sequence number is $b$ in the $N$ elements; and

$$b = a \bmod N,$$

where

mod represents a modulo operation.

In a possible implementation, symbol sequence numbers of the $M$ time domain symbols in the first time domain resource belong to a first set, and the first set satisfies:

$$\mathbf{R} = \{T \times e + z \mid e \in \mathbf{S}, \mathbf{S} \subseteq \{0, 1, 2, \dots\}\},$$

where

**R** represents the first set, T is a positive integer, a difference between symbol sequence numbers of any two of the $M$ time domain symbols in the first time domain resource is an integer multiple of T, z is an offset of a $1^{st}$ time domain symbol in the $M$ time domain symbols relative to a $1^{st}$ time domain symbol in the first time domain resource, **S** represents a second set, the second set is a subset of a natural number set, and a quantity of elements in the second set is $M$.

The element $a$ in the mask sequence is the element $b$ in the $N$ elements included in the column $i$ or the row $i$, and the element $b$ is the element whose sequence number is $b$ in the $N$ elements, where

$$b = \mathrm{U}[a] \bmod N$$

U represents a first sequence, the first sequence is a sequence formed by elements in the second set in ascending order, and U[$a$] is an element whose sequence number is $a$ in the first sequence.

In a possible implementation, the first matrix is a Vandermonde matrix.

In a possible implementation, the first matrix is a discrete Fourier transform DFT matrix.

In a possible implementation, when the first matrix is the DFT matrix, the column $i$ or the row $i$ satisfies:

$$\boldsymbol{w}_i[n] = \exp\left(j\frac{2\pi}{N}in\right), n = 0,1,2,\ldots,N-1,$$

where

$N$ is a quantity of elements in the column $i$, and $i \in \{0, 1, 2, \ldots, N\text{-}1\}$.

In a possible implementation, $N$ is 19 or a multiple of 19;

$N$ is 3 or a multiple of 3; or
$N$ is $2^6$ or $2^r$, and r is a positive integer not equal to 6.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

According to a third aspect, this application provides a communication apparatus. The apparatus is a first device, and the apparatus includes:

a determining unit, configured to determine a first time domain resource, where the first time domain resource includes $M$ time domain symbols, $M$ is an integer greater than 1, and an interval between any two of the $M$ time domain symbols is greater than or equal to one time domain symbol; and
a transceiver unit, configured to send a first signal on the $M$ time domain symbols, where a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

In a possible implementation, the transceiver unit is further configured to:
send the second signal on a second time domain resource, where the first time domain resource and the second time domain resource do not overlap.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, sending a first signal on the $M$ time domain symbols includes:
sending the first signal on a first frequency domain resource and the $M$ time domain symbols.

The transceiver unit is further configured to:
send a third signal or the second signal on a second frequency domain resource and the $M$ time domain symbols.

The second frequency domain resource and the first frequency domain resource do not overlap.

In a possible implementation, the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

In a possible implementation, the column $i$ or the row $i$ includes $N$ elements, $N$ is an integer greater than 1, $N$ is greater than or equal to $M$, and $M$ elements in the mask sequence are $M$ of the $N$ elements.

In a possible implementation, in the first time domain resource, an absolute value of a difference between symbol sequence numbers of any two adjacent time domain symbols in the $M$ time domain symbols is the same. The element $a$ in the mask sequence is an element $a$ in the $N$ elements, and the element $a$ in the $N$ elements is an element whose sequence number is $a$ in the $N$ elements.

In a possible implementation, the column $i$ or the row $i$ includes $N$ elements, $N$ is an integer greater than 1, $N$ is less than $M$, $M$ elements in the mask sequence include at least two same elements, the at least two same elements are elements in the N elements, and the M elements include all or some of the N elements.

In a possible implementation, in the first time domain resource, an absolute value of a difference between symbol sequence numbers of any two adjacent time domain symbols in the M time domain symbols is the same. The column i or the row i includes N elements, N is an integer greater than 1, N is less than M, the element a in the mask sequence is an element b in the N elements, and the element b is an element whose sequence number is b in the N elements; and

$$b=a \bmod N,$$

where
mod represents a modulo operation.

In a possible implementation, symbol sequence numbers of the M time domain symbols in the first time domain resource belong to a first set, and the first set satisfies:

$$\mathbf{R}=\{T \times e + z | e \in \mathbf{S}, \mathbf{S} \subseteq \{0,1,2,...\}\},$$

where
**R** represents the first set, T is a positive integer, a difference between symbol sequence numbers of any two of the M time domain symbols in the first time domain resource is an integer multiple of T, z is an offset of a 1st time domain symbol in the M time domain symbols relative to a 1st time domain symbol in the first time domain resource, **S** represents a second set, the second set is a subset of a natural number set, and a quantity of elements in the second set is M.

The element a in the mask sequence is the element b in the N elements included in the column i or the row i, and the element b is the element whose sequence number is b in the N elements, where

$$b=U[a] \bmod N$$

U represents a first sequence, the first sequence is a sequence formed by elements in the second set in ascending order, and U[a] is an element whose sequence number is a in the first sequence.

In a possible implementation, the first matrix is a Vandermonde matrix.

In a possible implementation, the Vandermonde matrix is a discrete Fourier transform DFT matrix.

In a possible implementation, when the first matrix is the DFT matrix, the column i or the row i satisfies:

$$w_i[n] = \exp\left(j\frac{2\pi}{N}in\right), n = 0,1,2,...,N-1,$$

where

N is a quantity of elements in the column i, and i∈{0, 1, 2, ..., N-1}.

In a possible implementation, N is 19 or a multiple of 19;

N is 3 or a multiple of 3; or
N is $2^6$ or $2^r$, and r is a positive integer not equal to 6.

In a possible implementation, the transceiver unit is further configured to:

receive a fourth signal on the M time domain symbols, where the fourth signal is an echo signal of the first signal;
receive a fifth signal on the second time domain resource, where the fifth signal is an echo signal of the second signal; and/or
receive a sixth signal on the second frequency domain resource and the M time domain symbols, where the sixth signal is an echo signal of the third signal or the second signal.

In a possible implementation, the transceiver unit is further configured to:
send first information to a second device, where the first information indicates the second device to receive a signal based on the first information, and the first information includes at least one of the following information: the first time domain resource, the first frequency domain resource, the second time domain resource, the second frequency domain resource, i, and N.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

According to a fourth aspect, this application provides a communication apparatus. The apparatus is a second device, and the apparatus includes:
a transceiver unit, configured to receive first information from a first device, where the first information includes a first time domain resource, the first time domain resource includes M time domain symbols, M is an integer greater than 1, and an interval between any two of the M time domain symbols is greater than or equal to one time domain symbol.

The transceiver unit is configured to receive a first signal on the M time domain symbols, where a signal that is in the first signal and that is located on a time domain symbol a is a product of a second signal and an element a in a mask sequence, a length of the mask sequence is M, the time domain symbol a is a symbol whose sequence number is a in the M time domain symbols, the element *a* in the mask sequence is an element whose sequence number is *a* in the mask sequence, and *a* is an integer greater than or equal to 0 and less than *M*.

In a possible implementation, the first information further includes a second time domain resource.

The transceiver unit is further configured to: receive the second signal on the second time domain resource, where the first time domain resource and the second time domain resource do not overlap.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, the first information further includes a first frequency domain resource and a second frequency domain resource.

Receiving a first signal on the *M* time domain symbols includes:

receiving the first signal on the first frequency domain resource and the *M* time domain symbols.

The transceiver unit is further configured to: receive a third signal or the second signal on the second frequency domain resource and the *M* time domain symbols.

The second frequency domain resource and the first frequency domain resource do not overlap.

In a possible implementation, the mask sequence is determined based on a column *i* or a row *i in* a first matrix, *i* is an integer greater than or equal to 0, the column *i* is a column whose sequence number is *i* in the first matrix, and the row *i* is a row whose sequence number is *i* in the first matrix.

In a possible implementation, the column *i* or the row *i* includes *N* elements, *N* is an integer greater than 1, *N* is greater than or equal to *M,* and *M* elements in the mask sequence are *M* of the *N* elements.

In a possible implementation, in the first time domain resource, an absolute value of a difference between symbol sequence numbers of any two adjacent time domain symbols in the *M* time domain symbols is the same. The element *a* in the mask sequence is an element *a* in the *N* elements, and the element *a* in the *N* elements is an element whose sequence number is *a* in the *N* elements.

In a possible implementation, the column *i* or the row *i* includes *N* elements, *N* is an integer greater than 1, *N* is less than *M, M* elements in the mask sequence include at least two same elements, the at least two same elements are elements in the *N* elements, and the *M* elements include all or some of the *N* elements.

In a possible implementation, in the first time domain resource, an absolute value of a difference between symbol sequence numbers of any two adjacent time domain symbols in the *M* time domain symbols is the same. The column *i* or the row *i* includes *N* elements, *N* is an integer greater than 1, *N* is less than *M*, the element *a* in the mask sequence is an element *b* in the *N* elements, and the element *b* is an element whose sequence number is *b* in the *N* elements; and

$$b=a \bmod N,$$

where
mod represents a modulo operation.

In a possible implementation, symbol sequence numbers of the *M* time domain symbols in the first time domain resource belong to a first set, and the first set satisfies:

$$\mathbf{R}=\{\mathrm{T} \times \mathrm{e} + \mathrm{z} | \mathrm{e} \in \mathbf{S}, \mathbf{S} \subseteq \{0,1,2, \dots \}\},$$

where
**R** represents the first set, T is a positive integer, a difference between symbol sequence numbers of any two of the *M* time domain symbols in the first time domain resource is an integer multiple of T, z is an offset of a $1^{st}$ time domain symbol in the *M* time domain symbols relative to a $1^{st}$ time domain symbol in the first time domain resource, **S** represents a second set, the second set is a subset of a natural number set, and a quantity of elements in the second set is *M*.

The element *a* in the mask sequence is the element *b* in the *N* elements included in the column *i* or the row *i,* and the element *b* is the element whose sequence number is *b* in the *N* elements, where

$$b=\mathrm{U}[a] \bmod N$$

U represents a first sequence, the first sequence is a sequence formed by elements in the second set in ascending order, and U[*a*] is an element whose sequence number is *a* in the first sequence.

In a possible implementation, the first matrix is a Vandermonde matrix.

In a possible implementation, the first matrix is a discrete Fourier transform DFT matrix.

In a possible implementation, when the first matrix is the DFT matrix, the column *i* or the row *i* satisfies:

$$w_i[n] = \exp\left(j\frac{2\pi}{N}in\right), n = 0,1,2, \dots, N-1,$$

where
*N* is a quantity of elements in the column *i*, and *i*∈{0, 1, 2, ..., *N-1}*.

In a possible implementation, *N* is 19 or a multiple of 19;

*N* is 3 or a multiple of 3; or
*N* is $2^6$ or $2^r$, and *r* is a positive integer not equal to 6.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

According to a fifth aspect, this application provides a communication apparatus. The apparatus may be a first device (for example, the first device may be an access network device), may be an apparatus in the first device, or may be an apparatus that can be used in combination with the first device. The communication apparatus may alternatively be a chip system. The communication apparatus may perform the method according to the first aspect. A function of the communication apparatus may be implemented by hardware, or may be implemented by executing corresponding software by hardware. The hardware or software includes one or more units or modules corresponding to the foregoing function. The unit or the module may be software and/or hardware. For operations performed by the communication apparatus and beneficial effects thereof, refer to the method in the first aspect and the beneficial effects thereof. Repeated parts are not described again.

According to a sixth aspect, this application provides a communication apparatus. The apparatus may be a second device (for example, the second device may be an access network device, or the second device may be a terminal device), may be an apparatus in the second device, or may be an apparatus that can be used in combination with the second device. The communication apparatus may alternatively be a chip system. The communication apparatus may perform the method according to the second aspect. A function of the communication apparatus may be implemented by hardware, or may be implemented by executing corresponding software by hardware. The hardware or software includes one or more units or modules corresponding to the foregoing function. The unit or the module may be software and/or hardware. For operations performed by the communication apparatus and beneficial effects thereof, refer to the method in the first aspect and the beneficial effects thereof. Repeated parts are not described again.

According to a seventh aspect, this application provides a communication apparatus. The apparatus may be a first device, the communication apparatus includes a processor and a transceiver, and the processor and the transceiver are configured to execute a computer program or instructions stored in at least one memory, to enable the apparatus to implement the method according to any one of the implementations of the first aspect.

According to an eighth aspect, this application provides a communication apparatus. The apparatus may be a first device, and the communication apparatus includes a processor, a transceiver, and a memory. The processor, the transceiver, and the memory are coupled. The processor and the transceiver are configured to implement the method according to any one of the implementations of the first aspect and/or the second aspect.

According to a ninth aspect, this application provides a communication apparatus. The apparatus may be a second device, the communication apparatus includes a processor and a transceiver, and the processor and the transceiver are configured to execute a computer program or instructions stored in at least one memory, to enable the apparatus to implement the method according to any one of the implementations of the second aspect.

According to a tenth aspect, this application provides a communication apparatus. The apparatus may be a second device, and the communication apparatus includes a processor, a transceiver, and a memory. The processor, the transceiver, and the memory are coupled. The processor and the transceiver are configured to implement the method according to any one of the implementations of the second aspect and/or the second aspect.

According to an eleventh aspect, this application provides a computer-readable storage medium. The storage medium stores a computer program or instructions, and when the computer program or the instructions are executed by a computer, the method according to any one of the implementations of the first aspect or the second aspect is implemented.

According to a twelfth aspect, this application provides a computer program product including instructions. The computer program product includes computer program code, and when the computer program code is run on a computer, the method according to any one of the implementations of the first aspect or the second aspect is implemented.

According to a thirteenth aspect, a communication system is provided. The communication system includes the first device according to the third aspect, the fifth aspect, the seventh aspect, or the eighth aspect, and the second device according to the fourth aspect, the sixth aspect, the ninth aspect, or the tenth aspect.

**BRIEF DESCRIPTION OF DRAWINGS**

FIG. 1 is a diagram of a structure of a communication system according to an embodiment of this application;
FIG. 2 is a diagram of an application scenario according to an embodiment of this application;
FIG. 3 is a diagram of another application scenario according to an embodiment of this application;
FIG. 4 is a diagram of another application scenario according to an embodiment of this application;

FIG. 5 is a schematic flowchart of a communication method according to an embodiment of this application;

FIG. 6 is a diagram of a hexagonal cellular networking form according to an embodiment of this application;

FIG. 7 is a diagram of a linear networking form along a highway according to an embodiment of this application;

FIG. 8a is a diagram of a mask sequence according to an embodiment of this application;

FIG. 8b is a diagram of another mask sequence according to an embodiment of this application;

FIG. 9 is a diagram of a signal sending scenario according to an embodiment of this application;

FIG. 10 is a diagram of another signal sending scenario according to an embodiment of this application;

FIG. 11 is a diagram of another signal sending scenario according to an embodiment of this application;

FIG. 12 is a diagram of a structure of a communication apparatus according to an embodiment of this application;

FIG. 13 is a diagram of a structure of another communication apparatus according to an embodiment of this application;

FIG. 14 is a diagram of a structure of another communication apparatus according to an embodiment of this application; and

FIG. 15 is a diagram of a structure of another communication apparatus according to an embodiment of this application.

## DESCRIPTION OF EMBODIMENTS

The following clearly and completely describes the technical solutions in embodiments of this application with reference to accompanying drawings in embodiments of this application.

In descriptions of this application, unless otherwise specified, "/" means "or". For example, A/B may mean A or B. "And/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example", "for example", or the like is used to give an example, an illustration, or a description. Any embodiment or design scheme described as "example" or "for example" in this application should not be construed as being more preferred or advantageous than other embodiments or design schemes. To be precise, the words such as "example" or "for example" are intended to present a relative concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as new radio (new radio, NR), a system evolved after 5G such as a 6th generation (6th generation, 6G) system, and a wireless local area network (Wireless Local Area Network, WLAN). This is not limited herein.

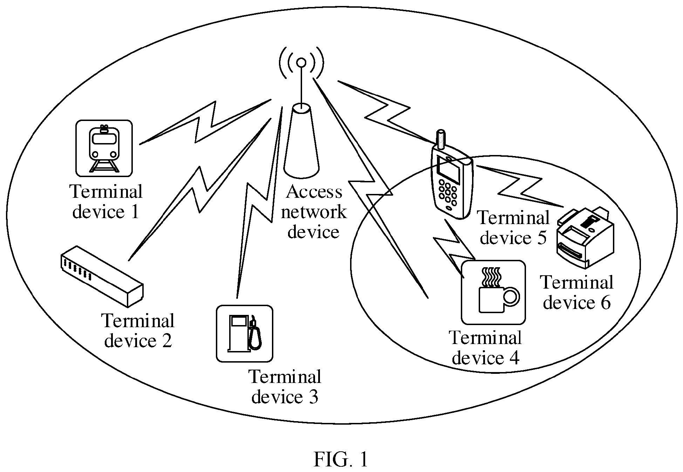

For example, FIG. 1 is a diagram of a structure of a communication system according to an embodiment of this application. As shown in FIG. 1, an access network device and a terminal device 1 to a terminal device 6 form a communication system. In the communication system, the terminal device 1 to the terminal device 6 may send uplink information to the access network device, and the access network device may also send downlink information to the terminal device 1 to the terminal device 6. In addition, a terminal device 4 to the terminal device 6 may also form a communication system. In the communication system, the access network device may send downlink information to the terminal device 1, a terminal device 2, a terminal device 5, and the like. The terminal device 5 may also send downlink information to the terminal device 4 and the terminal device 6. The terminal device 4 and the terminal device 6 may also send uplink information to the access network device via the terminal device 5.

The terminal device in embodiments of this application may be a device having a wireless transceiver function, and may be specifically user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to the wireless modem, a vehicle-mounted device, a communication device carried on a high-altitude aircraft, a wearable device, an unmanned aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in a terminal device or used in combination with a terminal device. In embodiments of this application, the chip system may include a chip, or may include a chip and another discrete component.

The access network device in embodiments of this application may be a device having a wireless transceiver function, and is configured to communicate with the terminal device, or may be a device that connects the terminal device to a wireless network. The access network device may be a node in a radio access network, may also be referred to as a base station, or may be referred to as a radio access network (radio access network, RAN) node (or device). The access network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the access network device in embodiments of this application may include base stations in various forms, for example, a macro base station, a micro base station (also referred to as a small cell), a relay station, an access point, a device that implements a base station function in a communication system evolved after 5G, an access point (access point, AP) in a Wi-Fi system, a transmission reception point (transmission reception point, TRP), a transmission point (transmission point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud access network (cloud radio access network, C-RAN) system, and an access network device in a non-terrestrial network (non-terrestrial network, NTN) communication system, that is, may be deployed on a high-altitude platform or a satellite. This is not limited in embodiments of this application.

The access network device may communicate and interact with a core network device, to provide a communication service for the terminal device. The core network device is, for example, a device in a 5G network core network (core network, CN). As a bearer network, the core network provides an interface to a data network, provides communication connection, authentication, management, and policy control for a terminal, bearers a data service, and the like.

In embodiments of this application, an apparatus configured to implement a function of the access network device may be an access network device, or may be an apparatus that can support the access network device in implementing the function, for example, a chip system. The apparatus may be mounted in an access network device or used in combination with an access network device.

It should be noted that the first device in embodiments of this application may be an access network device, the second device may be an access network device, or the second device may be a terminal device. This is not limited herein.

It should be noted that this application is applicable to the following three scenarios:

1. In a scenario in which the first device sends a sensing signal and the first device receives an echo signal of the sensing signal, the first device may be specifically an access network device.
2. In a scenario in which the first device sends a sensing signal and the second device receives the sensing signal, the first device and the second device are different access network devices.
3. In a scenario in which the first device sends a sensing signal and the second device receives the sensing signal, the first device is an access network device, and the second device is a terminal device.

The following separately describes the three scenarios as examples.

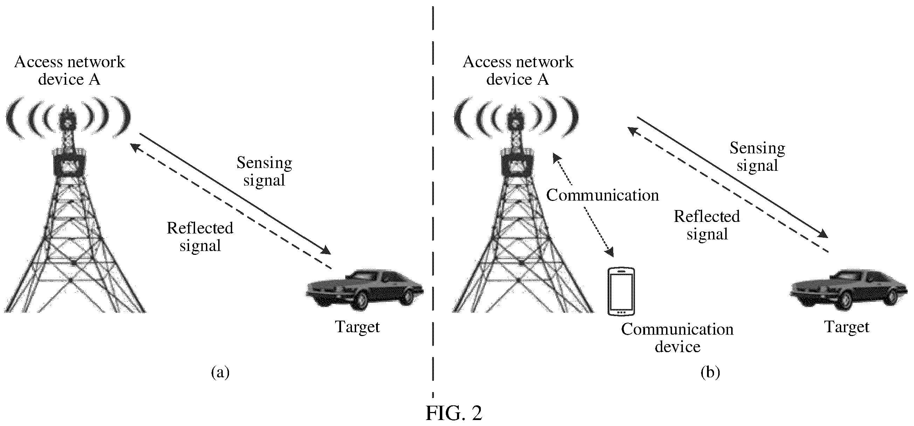

For example, FIG. 2 is a diagram of an application scenario according to an embodiment of this application. As shown in (a) in FIG. 2, an access network device A transmits a sensing signal, and the access network device A receives a reflected signal (or referred to as an echo signal) generated when the sensing signal encounters a target in an environment, to sense information such as a position and a velocity of the target. It should be noted that, when the access network device A performs sensing, a manner of time division multiplexing of communication may be used. That is, the access network device A transmits only the sensing signal. Alternatively, other multiplexing manners such as frequency division multiplexing and space division multiplexing of a communication signal may be used, to perform sensing and communication simultaneously. As shown in (b) in FIG. 2, the access network device A transmits a sensing signal to sense the target, and simultaneously sends a communication signal to communicate with a communication device.

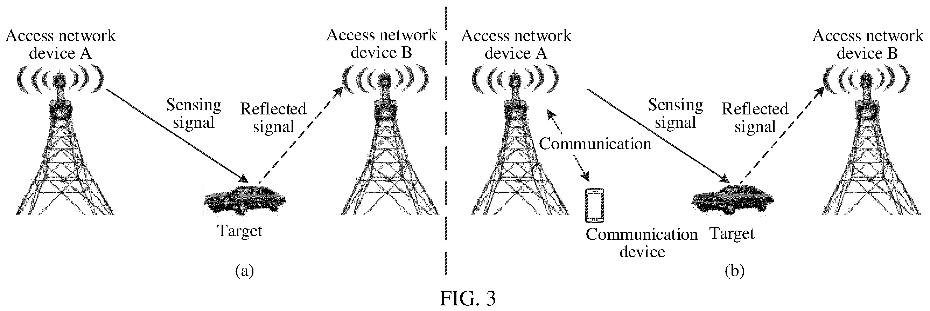

For example, FIG. 3 is a diagram of another application scenario according to an embodiment of this application. As shown in (a) in FIG. 3, an access network device A transmits a sensing signal, and another access network device B receives a reflected signal (or referred to as an echo signal) generated when the sensing signal encounters a target in an environment, to sense information such as a position and a velocity of the target. It should be noted that, when the access network device A performs sensing, a manner of time division multiplexing of communication may be used. That is, the access network device A transmits only the sensing signal. Alternatively, other multiplexing manners such as frequency division multiplexing and space division multiplexing of a communication signal may be used, to perform sensing and communication simultaneously. As shown in (b) in FIG. 3, the access network device A transmits a sensing signal to sense the target, and simultaneously sends a communication signal to communicate with a communication device.

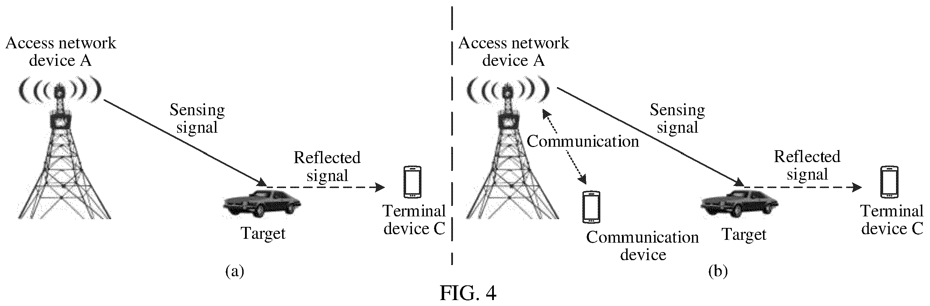

For example, FIG. 4 is a diagram of another application scenario according to an embodiment of this application. As shown in (a) in FIG. 4, an access network device A transmits a sensing signal, and a terminal device C receives a reflected signal (or referred to as an echo signal) generated when the sensing signal encounters a target in an environment, to sense information such as a position and a velocity of the target. It should be noted that, when the access network device A performs sensing, a manner of time division multiplexing of communication may be used. That is, the access network device A transmits only the sensing signal. Alternatively, other multiplexing manners such as frequency division multiplexing and space division multiplexing of a communication signal may be used, to perform sensing and communication simultaneously. As shown in (b) in FIG. 4, the access network device A transmits a sensing signal to sense the target, and simultaneously sends a communication signal to communicate with a communication device.

It should be noted that the target in this application may be various tangible objects that can reflect an electromagnetic wave, for example, a ground object such as a mountain, a forest, or a building, and may further include a movable object such as a vehicle, an unmanned aerial vehicle, a pedestrian, or a terminal device. The target may also be referred to as a sensed target, a detected target, a sensed object, a detected object, a sensed device, or the like. This is not limited in embodiments of this application.

To facilitate understanding of related content in embodiments of this application, the following describes some knowledge needed in the solutions in this application. It should be noted that these explanations are intended to make embodiments of this application easier to understand, but should not be considered as a limitation on the protection scope claimed in this application.

1. Coherent processing time

The coherent processing time refers to a time period that is much longer than a sending periodicity of a sensing signal. In the coherent processing time, a transmit end periodically sends a sensing signal in a same beam direction, and a receive end receives an echo signal of the sensing signal, and performs coherent accumulation on all echo signals received in the time period, to implement range and velocity sensing, where the coherent accumulation may be generally implemented by performing matched filtering and Fourier transform on all the echo signals in the time period. The sensing signal may be understood as an orthogonal frequency division multiplexing (orthogonal frequency division multiplexing, OFDM) signal obtained by modulating a specific sequence on a subcarrier. The specific sequence may be any one of the following sequences: a Zadoff-Chu sequence (ZC sequence for short), a pseudo-random sequence, a predefined sequence, and the like. The pseudo-random sequence includes any one of the following sequences: a longest linear feedback shift register sequence (m sequence for short), a Gold sequence, and the like. The predefined sequence may be, for example, a random data symbol. For example, the predefined sequence may be a random data symbol modulated in a manner such as quadrature phase shift keying (quadrature phase shift keying, QPSK) or 16 quadrature amplitude modulation (quadrature amplitude modulation, QAM).

2. Slow time dimension

The slow time dimension described in embodiments of this application may include a dimension along a sensing signal repetition periodicity. For example, a first device periodically sends a sensing signal (or referred to as a pulse). When a plurality of pulses are processed, slow time may be used for marking time between different pulses, and one pulse may be considered as one sampling in the slow time dimension.

3. Integrated communication and sensing

The integrated communication and sensing is a key technology in a next generation wireless communication network, aims to integrate two functions, that is, wireless communication and sensing, into a same system, and implements sensing functions such as positioning, detection, imaging, and identification of a target by using various propagation characteristics of a radio signal, to obtain surrounding physical environment information, explore a communication capability, and enhance user experience.

A basic principle of sensing is to transmit a sensing signal and receive an echo signal reflected by a target in an environment. A delay of the echo signal relative to the sent sensing signal reflects a range from the target, and a Doppler shift of the echo signal relative to the sent sensing signal reflects a velocity of the target. The echo signal may also be described as a reflected signal or the like. This is not limited herein.

It should be noted that, in a networking scenario, all base stations use a same time-frequency resource for sensing. Any base station A is used as an example. When performing sensing, the base station A sends a sensing signal, and receives an echo signal of the sensing signal sent by the base station A. In addition, because all the base stations use the same time-frequency resource for sensing, the base station A further receives noise and a sensing signal (that is, an inter-base station interference signal) that is sent by another base station. Currently, sensing signals sent by each base station within coherent processing time are the same. Therefore, the sensing signal (that is, the inter-base station interference signal) sent by the another base station and received by the base station A is almost unchanged within the coherent processing time. When performing sensing processing, the base station A performs, along a slow time dimension, discrete Fourier transform (discrete Fourier transform, DFT) on signals received in the coherent processing time. In this case, inter-base station interference signals are concentrated at a zero frequency/low frequency of a velocity spectrum, corresponding to a zero velocity/low velocity. Consequently, a low-velocity target is shielded by the interference signal and cannot be effectively detected. A velocity of the target may be decomposed into a radial velocity in a direction of a connection line between the base station and the target and a tangential velocity in a direction perpendicular to the connection line between the base station and the target. It may be understood that the velocity in embodiments of this application may be understood as the radial velocity of the target. When the radial velocity of the target is less than a velocity threshold, the target is a low-velocity target. When the radial velocity of the target is greater than the velocity threshold, the target is a high-velocity target. For example, the velocity threshold may be 5 km/h, 10 km/h, or the like. This is specifically determined based on an actual scenario, and is not limited herein.

Based on this, this application provides a communication method and a related apparatus, to detect the low-velocity target.

It should be noted that both a second signal and a third signal in the following embodiments of this application are OFDM signals generated based on a specific sequence, and the specific sequence may be any one of the following sequences: a Zadoff-Chu sequence (ZC sequence for short), a pseudo-random sequence, a predefined sequence, and the like. This is not limited herein. The pseudo-random sequence includes any one of the following sequences: a longest linear feedback shift register sequence (m sequence for short) and a Gold sequence. The predefined sequence may be, for example, a random data symbol. For example, the predefined sequence may be a random data symbol modulated in a manner such as QPSK or 16 QAM. This is not limited herein.

The following describes in detail the communication method and the communication apparatus provided in this application.

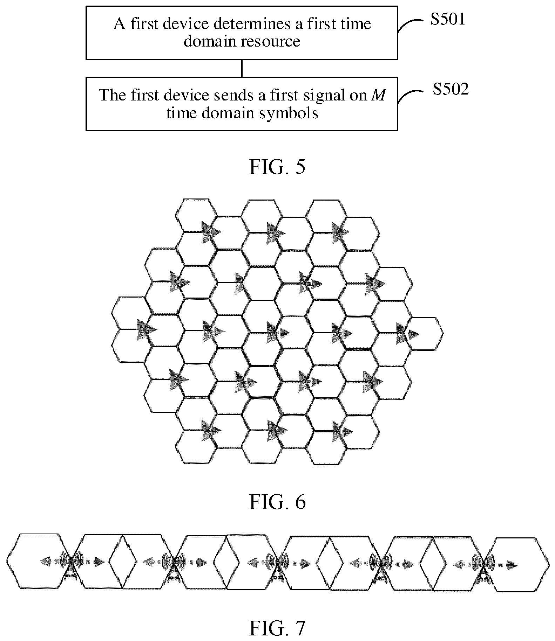

FIG. 5 is a schematic flowchart of a communication method according to an embodiment of this application. As shown in FIG. 5, the communication method includes the following steps S501 and S502. The method shown in FIG. 5 may be performed by a first device. Alternatively, the method shown in FIG. 5 may be performed by a chip in the first device. In the following embodiment of this application, the first device is used as an example for description.

S501: The first device determines a first time domain resource.

The first time domain resource includes $M$ time domain symbols, $M$ is an integer greater than 1, and an interval between any two of the $M$ time domain symbols is greater than or equal to one time domain symbol. It should be noted that, in this embodiment of this application, in addition to the $M$ time domain symbols, the first time domain resource may further include another time domain symbol, and the another time domain symbol may be used for communication of the first device.

Optionally, in an example, symbol sequence numbers of the $M$ time domain symbols in the first time domain resource belong to a first set, and the first set satisfies:

$$\mathbf{R} = \{T \times e + z \mid e \in \mathbf{S}, \mathbf{S} \subseteq \{0, 1, 2, \ldots\}\},$$

where $\mathbf{R}$ represents the first set, $T$ is a positive integer, a difference between symbol sequence numbers of any two of the $M$ time domain symbols in the first time domain resource is an integer multiple of $T$, $z$ is an offset of a 1st time domain symbol in the $M$ time domain symbols relative to a 1st time domain symbol in the first time domain resource, $\mathbf{S}$ represents a second set, the second set is a subset of a natural number set, and a quantity of elements in the second set is $M$.

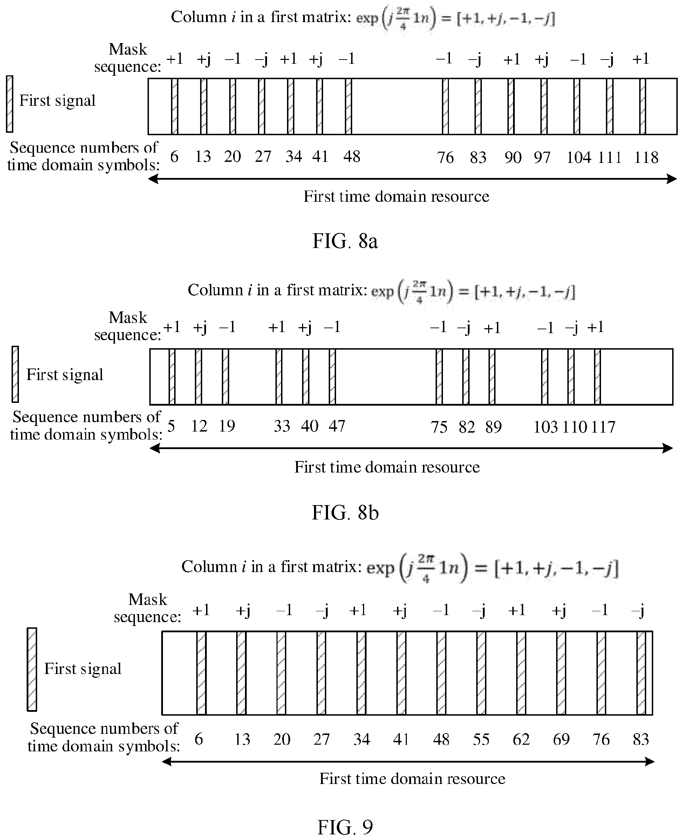

For example, as shown in FIG. 8a, assuming that $M$ is 14, $T$ is 7, $z$ is 6, and $S=\{0, 1, 2, 3, 4, 5, 6, 10, 11, 12, 13, 14, 15, 16\}$, $\mathbf{R}=\{6, 13, 20, 27, 34, 41, 48, 76, 83, 90, 97, 104, 111, 118\}$. In other words, in the first time domain resource, symbol sequence numbers of 14 time domain symbols included in the first time domain resource are respectively 6, 13, 20, 27, 34, 41, 48, 76, 83, 90, 97, 104, 111, and 118.

For another example, as shown in FIG. 8b, assuming that $M=12$, $T$ is 7, $z$ is 5, and $S=\{0, 1, 2, 4, 5, 6, 10, 11, 12, 14, 15, 16\}$, $\mathbf{R}=\{5, 12, 19, 33, 40, 47, 75, 82, 89, 103, 110, 117\}$. In other words, in the first time domain resource, symbol sequence numbers of 12 time domain symbols included in the first time domain resource are respectively 5, 12, 19, 33, 40, 47, 75, 82, 89, 103, 110, and 117.

It may be understood that the first time domain resource is in a first time period, and duration of the first time period may be greater than or equal to duration of coherent processing time. For example, the duration of the coherent processing time may be 10 ms, 20 ms, or the like. This is specifically determined based on an actual scenario, and is not limited herein.

S502: The first device sends a first signal on the *M* time domain symbols.

A signal that is in the first signal and that is located on a time domain symbol *a* is a product of a second signal and an element *a* in a mask sequence.

It may be understood that a length of the mask sequence is *M,* the time domain symbol *a* is a symbol whose sequence number is *a* in the *M* time domain symbols, the element *a* in the mask sequence is an element whose sequence number is *a* in the mask sequence, and *a* is an integer greater than or equal to 0 and less than *M.* Generally, the symbol whose sequence number is *a* in the *M* time domain symbols is an (*a* +1)$^{\text{th}}$ symbol in the *M* time domain symbols. Therefore, that a signal that is in the first signal and that is located on a time domain symbol *a* is a product of a second signal and an element *a* in a mask sequence may be understood as that the first signal sent on the (*a*+1)$^{\text{th}}$ time domain symbol in the *M* time domain symbols included in the first time domain resource is a product of the second signal and an (*a*+1)$^{\text{th}}$ element in the mask sequence.

Generally, the sequence number may also be understood as a number, an index, or the like. The element whose sequence number is *a* in the mask sequence may be understood as the (*a*+1)$^{\text{th}}$ element in the mask sequence, and the symbol whose sequence number is *a* in the *M* time domain symbols may be understood as the (*a*+1)$^{\text{th}}$ symbol in the *M* time domain symbols. Herein, a value of *a* may be 0, 1, 2, ..., or *M*-1, that is, *a*∈{0, 1, 2, ..., M-1}.

For example, it is assumed that the mask sequence is [+1, +j, -1, -j], where in the mask sequence, a 1$^{\text{st}}$ element is +1, a 2$^{\text{nd}}$ element is +j, a 3$^{\text{rd}}$ element is -1, and a 4$^{\text{th}}$ element is -j; or in the mask sequence, an element corresponding to an element sequence number 0 is +1, an element corresponding to an element sequence number 1 is +j, an element corresponding to an element sequence number 2 is -1, and an element corresponding to an element sequence number 3 is -j. j represents an imaginary unit.

It should be noted that the mask sequence in this embodiment of this application is determined based on a column *i* or a row *i* in a first matrix. For example, the first matrix may be a Vandermonde matrix (Vandermonde matrix). For example, the first matrix is a DFT matrix. This is not limited herein. *i* is an integer greater than or equal to 0, the column *i* is a column whose sequence number is *i* in the first matrix, and the row *i* is a row whose sequence number is *i* in the first matrix. Alternatively, the column *i* may be understood as an (*i*+1)$^{\text{th}}$ column in the first matrix, and the row *i* may be understood as an (*i*+1)$^{\text{th}}$ row in the first matrix.

It may be understood that the column *i* or the row *i* includes *N* elements, N is an integer greater than 1, and a value of *i* may be 0, 1, 2, ..., or *N*-1, that is, *i*∈{0, 1, 2, ..., N-1}. Herein, that the column *i* or the row *i* includes *N* elements may be understood as that a length of the column *i* or the row *i* is *N*.

For example, the column *i* or the row *i* satisfies:

$$w_i[n] = \exp\left(j\frac{2\pi}{N}in\right), n = 0,1,2,\dots,N-1,$$

where

*N* is a quantity of elements in the column *i*, and *i*∈{0, 1, 2, ..., N-1}.

It should be noted that *N* in this application may also be understood as a dimension of the first matrix.

A value of *N* may be 19 or a multiple of 19; a value of *N* may be 3 or a multiple of 3; or a value of *N* may be 2$^6$ or 2$^r$, where *r* is a positive integer not equal to 6.

In a possible implementation of this application, the mask sequence is determined based on a column *i* or a row *i* in the DFT matrix. If a quantity of elements in a column or a row in the DFT matrix is *N, N* mask sequences may be determined based on the DFT matrix. The *N* mask sequences may be allocated to *N* access network devices (for example, base stations) for use.

For a hexagonal cellular networking form, as shown in FIG. 6, it is generally considered that seven (a central base station and six base stations in a circle that are closest to the central base station), 19 (the central base station and 18 base stations in two circles that are closest to the central base station), 37 (the central base station and 36 base stations in three circles that are closest to the central base station), or 61 (the central base station and 60 base stations in four circles that are closest to the central base station) base stations multiplex *N* mask sequences determined based on one DFT matrix.

When the seven base stations (the central base station and the six base stations in a circle that are closest to the central base station) multiplex seven mask sequences determined based on a DFT matrix with *N*=7, an interference signal between two base stations that reuse a same mask sequence and an echo signal reflected by a target in a coverage area of the base stations fall in a same time domain symbol. Consequently, a low-velocity target cannot be detected. When the 19 base stations (the central base station and the 18 base stations in two circles that are closest to the central base station) multiplex 19 mask sequences determined based on a DFT matrix with *N*=19, an interference signal between two base stations that reuse a same mask sequence and an echo signal reflected by a target in a coverage area of the base stations fall in different time domain symbols, and when any one of the 19 base stations performs sensing, interference signals of the other 18 base stations in the 19 base stations all fall in a high-velocity range of a velocity spectrum. Therefore, a low-velocity target can be detected. If the 37 base stations (the central base station and the 36 base stations in three circles that are closest to the central base station) multiplex 37 mask sequences determined based on a DFT matrix with $N$=37, when any one of the 37 base stations performs sensing, an interference signal of at least one other base station falls in a low-velocity range of a velocity spectrum. Consequently, a low-velocity target cannot be detected. Therefore, $N$ determined in this application is 19. To be specific, the 19 base stations (the central base station and the 18 base stations in two circles that are closest to the central base station) multiplex the 19 mask sequences determined based on the DFT matrix with $N$=19. In addition, when the 19 base stations (the central base station and the 18 base stations in two circles that are closest to the central base station) multiplex 19 of 19×$f$ mask sequences determined based on a DFT matrix with $N$=19×$f$, the detection of the low-velocity target may also be similarly implemented. $f$ is a positive integer.

For a linear networking form along a highway, as shown in FIG. 7, it is generally considered that adjacent base stations whose quantity is 2, 3, 4, ..., or the like multiplex $N$ mask sequences determined based on one DFT matrix. In a scenario in which an inter-site range is 1 km, when three adjacent base stations multiplex three mask sequences determined based on a DFT matrix with $N$=3, an interference signal between two base stations that reuse a same mask sequence and an echo signal reflected by a target in a coverage area of the base stations fall in different time domain symbols, and when any one of the three base stations performs sensing, interference signals of the other two base stations all fall in a high-velocity range of a velocity spectrum. Therefore, a low-velocity target can be detected. In a scenario in which an inter-site range is 500 m, when six adjacent base stations multiplex six mask sequences determined based on a DFT matrix with $N$=6, an interference signal between two base stations that reuse a same mask sequence and an echo signal reflected by a target in a coverage area of the base stations fall in different time domain symbols, and when any one of the six base stations performs sensing, interference signals of the other five base stations all fall in a high-velocity range of a velocity spectrum. Therefore, a low-velocity target can be detected. In a scenario in which an inter-site range is 300 m, when nine adjacent base stations multiplex nine mask sequences determined based on a DFT matrix with $N$=9, an interference signal between two base stations that reuse a same mask sequence and an echo signal reflected by a target in a coverage area of the base stations fall in different time domain symbols, and when any one of the nine base stations performs sensing, interference signals of the other eight base stations all fall in a high-velocity range of a velocity spectrum. Therefore, a low-velocity target can be detected. Therefore, $N$ determined in this application is 3 or a multiple of 3.

Because $N$ applicable to the foregoing two networking forms is different, in this application, a DFT matrix whose dimension $N$ is $2^r$ is preferentially selected, so that a mask sequence generated based on the DFT matrix whose dimension $N$ is $2^r$ is applicable to the foregoing two networking forms. When r is a positive integer less than or equal to 5, the 19 base stations (the central base station and the 18 base stations in two circles that are closest to the central base station) multiplex 19 mask sequences determined based on the DFT matrix with $N$=$2^r$, and any one of the 19 base stations performs sensing, an interference signal of at least one other base station falls in a low-velocity range of a velocity spectrum. Consequently, a low-velocity target cannot be detected. When r is a positive integer greater than or equal to 6, the 19 base stations (the central base station and the 18 base stations in two circles that are closest to the central base station) multiplex 19 mask sequences determined based on the DFT matrix with $N$=$2^r$, and any one of the 19 base stations performs sensing, interference signals of the other 18 base stations all fall in a high-velocity range of a velocity spectrum. Therefore, a low-velocity target can be detected. However, when r is greater than or equal to 7, sensing performance in the solution is not significantly improved, and calculation complexity is higher. Therefore, in this application, it is determined that $N$ is $2^6$ or $2^r$, and r is a positive integer not equal to 6.

In other words, for the hexagonal cellular networking form, as shown in FIG. 6, a value of $N$ is 19 or a multiple of 19. For example, $N$=19, 38, ..., or the like. For example, the DFT matrix with $N$=19 is used as an example. A column $i$ or a row $i$ in the matrix satisfies:

$$\boldsymbol{w}_i[n] = \exp\left(j\frac{2\pi}{N}in\right), n = 0,1,2,\ldots,18,$$

where
$N$ is a quantity of elements in the column $i$, and $i \in \{0, 1, 2, ..., 18\}$.

For the linear networking form along the highway, as shown in FIG. 7, a value of $N$ is 3 or a multiple of 3. For example, $N$=3, 6, ..., or the like. For example, the DFT matrix with $N$=3 is used as an example. A column $i$ or a row $i$ in the matrix satisfies:

$$\boldsymbol{w}_i[n] = \exp\left(j\frac{2\pi}{N}in\right), n = 0,1,2,$$

where
$N$ is a quantity of elements in the column $i$, and $i \in \{0, 1, 2\}$.

When r=6, that is, a DFT matrix with $N$=64 is used as an example, a column $i$ or a row $i$ in the matrix satisfies:

$$\boldsymbol{w}_i[n] = \exp\left(j\frac{2\pi}{N}in\right), n = 0,1,2,\ldots,63,$$

where

$N$ is a quantity of elements in the column $i$, and $i \in \{0, 1, 2, ..., 63\}$.

For ease of understanding, an example in which $N=4$ and $i=1$ is mainly used for description below. When $N=4$, a column 1 or a row 1 is specifically [+1, +j, -1, -j].

The following describes an implementation of determining the mask sequence based on the column $i$ or the row $i$ in the first matrix.

In an implementation, when $N$ is greater than or equal to $M$, $M$ elements in the mask sequence are $M$ elements in the $N$ elements included in the column $i$ or the row $i$. Specifically, the element $a$ in the mask sequence is an element $a$ in the $N$ elements. The element $a$ in the $N$ elements is an element whose sequence number is $a$ in the $N$ elements.

In another implementation, when $N$ is less than $M$, $M$ elements in the mask sequence include at least two same elements, the at least two same elements are elements in the $N$ elements, and the $M$ elements include all or some of the $N$ elements.

For example, assuming that in the first time domain resource, a difference between symbol sequence numbers of two adjacent time domain symbols in the $M$ time domain symbols is the same, the element $a$ in the mask sequence is an element $b$ in $N$ elements included in the column $i$ or the row $i$, and the element $b$ is an element whose sequence number is $b$ in the $N$ elements; and

$$b = a \bmod N,$$

where

mod represents a modulo operation, and $N$ is an integer greater than 1.

For example, it is assumed that $N=4$, that is, the column $i$ in the first matrix includes four elements. $i=1$ is used as an example, and the column 1 is specifically [+1, +j, -1, -j]. If $M=3$, that is, the mask sequence includes three elements, the mask sequence may be [+1, +j, -1].

For example, it is assumed that $N=4$, that is, the column $i$ in the first matrix includes four elements. $i=1$ is used as an example, and the column 1 is specifically [+1, +j, -1, -j]. If $M=4$, that is, the mask sequence includes four elements, the mask sequence may be [+1, +j, -1, -j].

For example, it is assumed that $N=4$, that is, the column $i$ in the first matrix includes four elements. $i=1$ is used as an example, and the column 1 is specifically [+1, +j, -1, -j]. If $M=7$, that is, the mask sequence includes seven elements, the mask sequence may be [+1, +j, -1, -j, +1, +j, -1].

For another example, it is assumed that symbol sequence numbers of the $M$ time domain symbols in the first time domain resource belong to a first set, and the first set satisfies:

$$R = \{T \times e + z \mid e \in S, S \subseteq \{0, 1, 2, ...\}\},$$

where

$R$ represents the first set, T is a positive integer, a difference between symbol sequence numbers of any two of the $M$ time domain symbols in the first time domain resource is an integer multiple of T, z is an offset of a 1st time domain symbol in the $M$ time domain symbols relative to a 1st time domain symbol in the first time domain resource, $S$ represents a second set, the second set is a subset of a natural number set, and a quantity of elements in the second set is $M$.

In this case, the element $a$ in the mask sequence is the element $b$ in the $N$ elements included in the column $i$ or the row $i$, and the element $b$ is the element whose sequence number is $b$ in the $N$ elements, where

$$b = U[a] \bmod N$$

U represents a first sequence, the first sequence is a sequence formed by elements in the second set in ascending order, and U[a] is an element whose sequence number is $a$ in the first sequence.

For example, as shown in FIG. 8a, M is 14, T is 7, z is 6, and the set **S is** {0, 1, 2, 3, 4, 5, 6, 10, 11, 12, 13, 14, 15, 16}. In this case, in the first time domain resource, the symbol sequence numbers of the 14 time domain symbols included in the first time domain resource are respectively 6, 13, 20, 27, 34, 41, 48, 76, 83, 90, 97, 104, 111, and 118. It is assumed that $N=4$, that is, the column $i$ in the first matrix includes four elements. For example, the column $i$ is specifically [+1, +j, -1, -j].

Elements in the set **S** are arranged in ascending order to form a sequence U whose length is $M=14$. In this case, the sequence U is [0, 1, 2, 3, 4, 5, 6, 10, 11, 12, 13, 14, 15, 16]. The element $a$ in the mask sequence is the element $b$ in the $N$ elements included in the column $i$, and the element $b$ is the element whose sequence number is $b$ in the $N$ elements, where

$$b = U[a] \bmod N$$

U[a] is an element whose sequence number is $a$ in the sequence U. In this case:

an element 0 in the mask sequence is an element 0 (U[0] mod 4) in the $N$ elements included in the column $i$, that is, +1;

an element 1 in the mask sequence is an element 1 (U[1] mod 4) in the $N$ elements included in the column $i$, that is, +j;

an element 2 in the mask sequence is an element 2 (U[2] mod 4) in the $N$ elements included in the column $i$, that is, -1;

an element 3 in the mask sequence is an element 3 (U[3] mod 4) in the $N$ elements included in the column $i$, that is, -j;

an element 4 in the mask sequence is an element 0 (U[4] mod 4) in the $N$ elements included in the column *i*, that is, +1;

an element 5 in the mask sequence is an element 1 (U[5] mod 4) in the *N* elements included in the column *i*, that is, +j;

an element 6 in the mask sequence is an element 2 (U[6] mod 4) in the *N* elements included in the column *i*, that is, -1;

an element 7 in the mask sequence is an element 2 (U[7] mod 4) in the *N* elements included in the column *i*, that is, -1;

an element 8 in the mask sequence is an element 3 (U[8] mod 4) in the *N* elements included in the column *i*, that is, -j;

an element 9 in the mask sequence is an element 0 (U[9] mod 4) in the *N* elements included in the column *i*, that is, +1;

an element 10 in the mask sequence is an element 1 (U[10] mod 4) in the *N* elements included in the column *i*, that is, +j;

an element 11 in the mask sequence is an element 2 (U[11] mod 4) in the *N* elements included in the column *i*, that is, -1;

an element 12 in the mask sequence is an element 3 (U[12] mod 4) in the *N* elements included in the column *i*, that is, -j; and

an element 13 in the mask sequence is an element 0 (U[13] mod 4) in the *N* elements included in the column *i*, that is, +1.

In conclusion, the mask sequence whose length is *M*=14 is [+1, +j, -1, -j, +1, +j, -1, -1, -j, +1, +j, -1, -j, +1].

For another example, as shown in FIG. 8b, *M* is 12, T is 7, z is 5, and the set **S is** {0, 1, 2, 4, 5, 6, 10, 11, 12, 14, 15, 16}. In this case, in the first time domain resource, the symbol sequence numbers of the 12 time domain symbols included in the first time domain resource are respectively 5, 12, 19, 33, 40, 47, 75, 82, 89, 103, 110, and 117. It is assumed that *N*=4, that is, the column *i* in the first matrix includes four elements. For example, the column *i* is specifically [+1, +j, -1, -j].

Elements in the set **S** are arranged in ascending order to form a sequence U whose length is *M*=12. In this case, the sequence U is [0, 1, 2, 4, 5, 6, 10, 11, 12, 14, 15, 16]. The element *a* in the mask sequence is the element *b* in the *N* elements included in the column *i,* and the element *b* is the element whose sequence number is *b* in the *N* elements, where

$$b = U[a] \bmod N$$

U[*a*] is an element whose sequence number is *a* in the sequence U. In this case:

an element 0 in the mask sequence is an element 0 (U[0] mod 4) in the *N* elements included in the column *i*, that is, +1;

an element 1 in the mask sequence is an element 1 (U[1] mod 4) in the *N* elements included in the column *i*, that is, +j;

an element 2 in the mask sequence is an element 2 (U[2] mod 4) in the *N* elements included in the column *i*, that is, -1;

an element 3 in the mask sequence is an element 0 (U[3] mod 4) in the *N* elements included in the column *i*, that is, +1;

an element 4 in the mask sequence is an element 1 (U[4] mod 4) in the *N* elements included in the column *i*, that is, +j;

an element 5 in the mask sequence is an element 2 (U[5] mod 4) in the *N* elements included in the column *i*, that is, -1;

an element 6 in the mask sequence is an element 2 (U[6] mod 4) in the *N* elements included in the column *i*, that is, -1;

an element 7 in the mask sequence is an element 3 (U[7] mod 4) in the *N* elements included in the column *i*, that is, -j;

an element 8 in the mask sequence is an element 0 (U[8] mod 4) in the *N* elements included in the column *i*, that is, +1;

an element 9 in the mask sequence is an element 2 (U[9] mod 4) in the *N* elements included in the column *i*, that is, -1;

an element 10 in the mask sequence is an element 3 (U[10] mod 4) in the *N* elements included in the column *i*, that is, -j; and

an element 11 in the mask sequence is an element 0 (U[11] mod 4) in the *N* elements included in the column *i*, that is, +1.

In conclusion, the mask sequence whose length is *M*=12 is [+1, +j, -1, +1, +j, -1, -1, -j, +1, -1, -j, +1].

For ease of understanding that in this application, the signal that is in the first signal and that is located on the time domain symbol *a* is the product of the second signal and the element *a* in the mask sequence, the following provides descriptions with reference to specific examples.

In an example, referring to FIG. 8a, a step of generating, based on the mask sequence and the second signal, the first signal sent on the 14 time domain symbols in the first time domain resource is as follows: A signal that is in the first signal and that is carried on a 1st time domain symbol (that is, a time domain symbol corresponding to a symbol sequence number 6 in the first time domain resource) in the 14 time domain symbols included in the first time domain resource is equal to the second signal multiplied by a 1st element (namely, +1) in the mask sequence, a signal that is in the first signal and that is carried on a 2nd time domain symbol (that is, a time domain symbol corresponding to a symbol sequence number 13 in the first time domain resource) in the 14 time domain symbols included in the first time domain resource is equal to the second signal multiplied by a 2nd element (namely, +j) in the mask sequence, a signal that is in the first signal and that is carried on a 3rd time domain symbol (that is, a time domain symbol corresponding to a symbol sequence number 20 in the first time domain resource) in the 14 time domain symbols included in the first time domain resource is equal to the second signal multiplied by a 3rd element (namely, -1) in the mask sequence, a signal that is in the first signal and that is carried on a 4th time domain symbol (that is, a time domain symbol corresponding to a symbol sequence number 27 in the first time domain resource) in the 14 time domain symbols included in the first time domain resource is equal to the second signal multiplied by a 4th element (namely, -j) in the mask sequence, a signal that is in the first signal and that is carried on a 5th time domain symbol (that is, a time domain symbol corresponding to a symbol sequence number 34 in the first time domain resource) in the 14 time domain symbols included in the first time domain resource is equal to the second signal multiplied by a 5th element (namely, +1) in the mask sequence, ..., a signal that is in the first signal and that is carried on a 13th time domain symbol (that is, a time domain symbol corresponding to a symbol sequence number 111 in the first time domain resource) in the 14 time domain symbols included in the first time domain resource is equal to the second signal multiplied by a 13th element (namely, -j) in the mask sequence, and a signal that is in the first signal and that is carried on a 14th time domain symbol (that is, a time domain symbol corresponding to a symbol sequence number 118 in the first time domain resource) in the 14 time domain symbols included in the first time domain resource is equal to the second signal multiplied by a 14th element (namely, +1) in the mask sequence.

In another example, referring to FIG. 8b, a step of generating, based on the mask sequence and the second signal, the first signal sent on the 12 time domain symbols in the first time domain resource is as follows: A signal that is in the first signal and that is carried on a 1st time domain symbol (that is, a time domain symbol corresponding to a symbol sequence number 5 in the first time domain resource) in the 12 time domain symbols included in the first time domain resource is equal to the second signal multiplied by a 1st element (namely, +1) in the mask sequence, a signal that is in the first signal and that is carried on a 2nd time domain symbol (that is, a time domain symbol corresponding to a symbol sequence number 12 in the first time domain resource) in the 12 time domain symbols included in the first time domain resource is equal to the second signal multiplied by a 2nd element (namely, +j) in the mask sequence, a signal that is in the first signal and that is carried on a 3rd time domain symbol (that is, a time domain symbol corresponding to a symbol sequence number 19 in the first time domain resource) in the 12 time domain symbols included in the first time domain resource is equal to the second signal multiplied by a 3rd element (namely, -1) in the mask sequence, a signal that is in the first signal and that is carried on a 4th time domain symbol (that is, a time domain symbol corresponding to a symbol sequence number 33 in the first time domain resource) in the 12 time domain symbols included in the first time domain resource is equal to the second signal multiplied by a 4th element (namely, +1) in the mask sequence, a signal that is in the first signal and that is carried on a 5th time domain symbol (that is, a time domain symbol corresponding to a symbol sequence number 40 in the first time domain resource) in the 12 time domain symbols included in the first time domain resource is equal to the second signal multiplied by a 5th element (namely, +j) in the mask sequence, ..., a signal that is in the first signal and that is carried on an 11th time domain symbol (that is, a time domain symbol corresponding to a symbol sequence number 110 in the first time domain resource) in the 12 time domain symbols included in the first time domain resource is equal to the second signal multiplied by an 11th element (namely, -j) in the mask sequence, and a signal that is in the first signal and that is carried on a 12th time domain symbol (that is, a time domain symbol corresponding to a symbol sequence number 117 in the first time domain resource) in the 12 time domain symbols included in the first time domain resource is equal to the second signal multiplied by a 12th element (namely, +1) in the mask sequence.

In still another example, FIG. 9 is a diagram of a signal sending scenario according to an embodiment of this application. As shown in FIG. 9, it is assumed that a first time domain resource includes 12 time domain symbols, and symbol sequence numbers of the 12 time domain symbols in the first time domain resource are respectively 6, 13, 20, 27, 34, 41, 48, 55, 62, 69, 76, and 83. Each time domain symbol is used for sending one signal. It is also assumed that a mask sequence is [+1, +j, -1, -j, +1, +j, -1, -j, +1, +j, -1, -j]. In this case, a first signal sent on the 12 time domain symbols may be generated based on the mask sequence and a second signal.

A step of generating, based on the mask sequence and the second signal, the first signal sent on the 12 time domain symbols in the first time domain resource is: A signal that is in the first signal and that is carried on a 1st time domain symbol (that is, a time domain symbol corresponding to a symbol sequence number 6 in the first time domain resource) in the 12 time domain symbols included in the first time domain resource is equal to the second signal multiplied by a 1st element (namely, +1) in the mask sequence, a signal that is in the first signal and that is carried on a 2nd time domain symbol (that is, a time domain symbol corresponding to a symbol sequence number 13 in the first time domain resource) in the 12 time domain symbols included in the first time domain resource is equal to the second signal multiplied by a 2nd element (namely, +j) in the mask sequence, a signal that is in the first signal and that is carried on a 3rd time domain symbol (that is, a time domain symbol corresponding to a symbol sequence number 20 in the first time domain resource) in the 12 time domain symbols included in the first time domain resource is equal to the second signal multiplied by a 3rd element (namely, -1) in the mask sequence, a signal that is in the first signal and that is carried on a 4th time domain symbol (that is, a time domain symbol corresponding to a symbol sequence number 27 in the first time domain resource) in the 12 time domain symbols included in the first time domain resource is equal to the second signal multiplied by a 4th element (namely, -j) in the mask sequence, a signal that is in the first signal and that is carried on a 5th time domain symbol (that is, a time domain symbol corresponding to a symbol sequence number 34 in the first time domain resource) in the 12 time domain symbols included in the first time domain resource is equal to the second signal multiplied by a 5th element (namely, +1) in the mask sequence, ..., a signal that is in the first signal and that is carried on an 11th time domain symbol (that is, a time domain symbol corresponding to a symbol sequence number 76 in the first time domain resource) in the 12 time domain symbols included in the first time domain resource is equal to the second signal multiplied by an 11th element (namely, -1) in the mask sequence, and a signal that is in the first signal and that is carried on a 12th time domain symbol (that is, a time domain symbol corresponding to a symbol sequence number 83 in the first time domain resource) in the 12 time domain symbols included in the first time domain resource is equal to the second signal multiplied by a 12th element (namely, -j) in the mask sequence.

Optionally, in some feasible implementations, in addition to sending the first signal on the $M$ time domain symbols in the first time domain resource, the first device may further send the second signal on L time domain symbols in a second time domain resource, where the first time domain resource and the second time domain resource do not overlap, and L is an integer greater than 1. A total quantity of time domain symbols included in the second time domain resource may be equal to a total quantity of time domain symbols included in the first time domain resource, or a total quantity of time domain symbols included in the second time domain resource may not be equal to a total quantity of time domain symbols included in the first time domain resource. This is specifically determined based on an actual scenario, and is not limited herein. Optionally, a quantity of time domain symbols that are in the second time domain resource and that are used for sending the second signal may be equal to a quantity of time domain symbols that are in the first time domain resource and that are used for sending the first signal (that is, $L=M$), or a quantity of time domain symbols that are in the second time domain resource and that are used for sending the second signal may not be equal to a quantity of time domain symbols that are in the first time domain resource and that are used for sending the first signal (that is, $L \neq M$). This is specifically determined based on an actual scenario, and is not limited herein. Signals sent on the $L$ time domain symbols in the second time domain resource are the same, and are all second signals.

It should be noted that the first time domain resource is in a first time period, the second time domain resource is in a second time period, the first time period and the second time period do not overlap, and both duration of the first time period and duration of the second time period are greater than or equal to duration of coherent processing time.

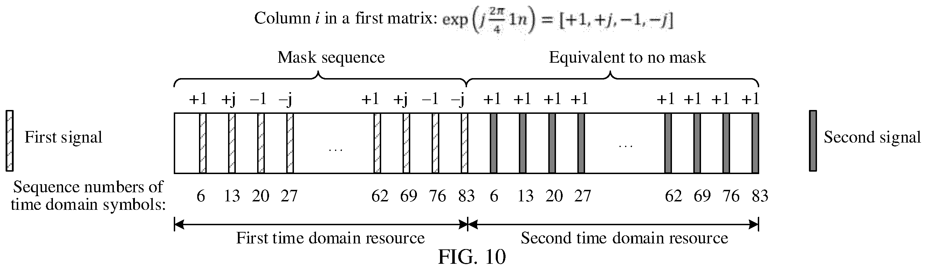

For example, FIG. 10 is a diagram of another signal sending scenario according to an embodiment of this application. As shown in FIG. 10, a first time domain resource and a second time domain resource are continuous and do not overlap. It is assumed that the first time domain resource may include 12 time domain symbols, and symbol sequence numbers of the 12 time domain symbols in the first time domain resource are respectively 6, 13, 20, 27, 34, 41, 48, 55, 62, 69, 76, and 83. The second time domain resource may also include 12 time domain symbols, and symbol sequence numbers of the 12 time domain symbols in the second time domain resource are respectively 6, 13, 20, 27, 34, 41, 48, 55, 62, 69, 76, and 83. A first device sends a first signal on the 12 time domain symbols in the first time domain resource, and sends a second signal on the 12 time domain symbols in the second time domain resource.

Assuming that a mask sequence is [+1, +j, -1, -j, +1, +j, -1, -j, +1, +j, -1, -j], the first signal sent on the 12 time domain symbols may be generated based on the mask sequence and the second signal.

A step of generating, based on the mask sequence and the second signal, the first signal sent on the 12 time domain symbols in the first time domain resource is: A signal that is in the first signal and that is carried on a 1st time domain symbol (that is, a time domain symbol corresponding to a symbol sequence number 6 in the first time domain resource) in the 12 time domain symbols included in the first time domain resource is equal to the second signal multiplied by a 1st element (namely, +1) in the mask sequence, a signal that is in the first signal and that is carried on a 2nd time domain symbol (that is, a time domain symbol corresponding to a symbol sequence number 13 in the first time domain resource) in the 12 time domain symbols included in the first time domain resource is equal to the second signal multiplied by a 2nd element (namely, +j) in the mask sequence, a signal on a 3rd time domain symbol (that is, a time domain symbol corresponding to a symbol sequence number 20 in the first time domain resource) in the 12 time domain symbols included in the first time domain resource is equal to the second signal multiplied by a 3rd element (namely, -1) in the mask sequence, a signal that is in the first signal and that is carried on a 4th time domain symbol (that is, a time domain symbol corresponding to a symbol sequence number 27 in the first time domain resource) in the 12 time domain symbols included in the first time domain resource is equal to the second signal multiplied by a 4th element (namely, -j) in the mask sequence, a signal that is in the first signal and that is carried on a 5th time domain symbol (that is, a time domain symbol corresponding to a symbol sequence number 34 in the first time domain resource) in the 12 time domain symbols included in the first time domain resource is equal to the second signal multiplied by a $5^{th}$ element (namely, +1) in the mask sequence, ..., a signal that is in the first signal and that is carried on an $11^{th}$ time domain symbol (that is, a time domain symbol corresponding to a symbol sequence number 76 in the first time domain resource) in the 12 time domain symbols included in the first time domain resource is equal to the second signal multiplied by an $11^{th}$ element (namely, -1) in the mask sequence, and a signal that is in the first signal and that is carried on a $12^{th}$ time domain symbol (that is, a time domain symbol corresponding to a symbol sequence number 83 in the first time domain resource) in the 12 time domain symbols included in the first time domain resource is equal to the second signal multiplied by a $12^{th}$ element (namely, -j) in the mask sequence.

Optionally, in some feasible implementations, that the first device sends the first signal on the $M$ time domain symbols may be understood as that the first device sends the first signal on a first frequency domain resource and the $M$ time domain symbols in the first time domain resource. In addition, the first device may further send a third signal or the second signal on a second frequency domain resource and the $M$ time domain symbols in the first time domain resource. The second frequency domain resource and the first frequency domain resource do not overlap. It may be understood that symbols sent on the second frequency domain resource and the first time domain resource are the same, and are both the third signal or the second signal. Herein, the third signal is a signal different from the first signal and the second signal.

It should be noted that the first frequency domain resource is in a first frequency band, the second frequency domain resource is in a second frequency band, and the first frequency band and the second frequency band do not overlap.

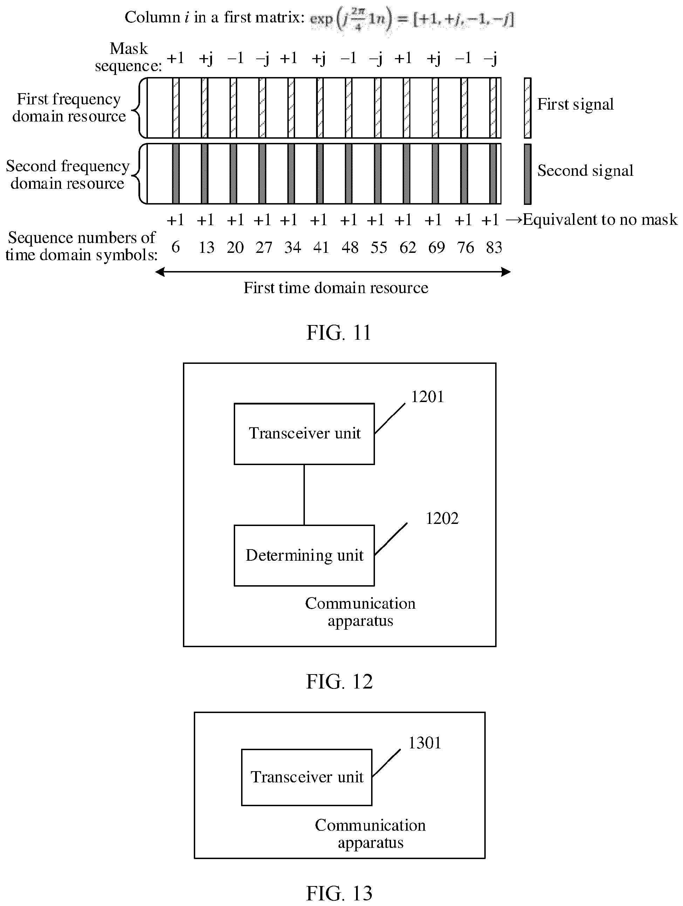

For example, FIG. 11 is a diagram of another signal sending scenario according to an embodiment of this application. As shown in FIG. 11, a first frequency domain resource and a second frequency domain resource do not overlap. It is assumed that a first time domain resource may include 12 time domain symbols, and symbol sequence numbers of the 12 time domain symbols in the first time domain resource are respectively 6, 13, 20, 27, 34, 41, 48, 55, 62, 69, 76, and 83. A first device sends a first signal on the first frequency domain resource and the 12 time domain symbols in the first time domain resource, and sends a second signal on the second frequency domain resource and the 12 time domain symbols in the first time domain resource. The first signal is a signal generated based on a mask sequence and the second signal.

Assuming that the mask sequence is [+1, +j, -1, -j, +1, +j, -1, -j, +1, +j, -1, -j], the first signal that is sent on the first frequency domain resource and the 12 time domain symbols in the first time domain resource may be generated based on the mask sequence and the second signal.

A step of generating, based on the mask sequence and the second signal, the first signal that is sent on the first frequency domain resource and the 12 time domain symbols in the first time domain resource is: A signal that is in the first signal and that is carried on a $1^{st}$ time domain symbol (that is, a time domain symbol corresponding to a symbol sequence number 6 in the first time domain resource) in the 12 time domain symbols included in the first time domain resource is equal to the second signal multiplied by a $1^{st}$ element (namely, +1) in the mask sequence, a signal that is in the first signal and that is carried on a $2^{nd}$ time domain symbol (that is, a time domain symbol corresponding to a symbol sequence number 13 in the first time domain resource) in the 12 time domain symbols included in the first time domain resource is equal to the second signal multiplied by a $2^{nd}$ element (namely, +j) in the mask sequence, a signal that is in the first signal and that is carried on a $3^{rd}$ time domain symbol (that is, a time domain symbol corresponding to a symbol sequence number 20 in the first time domain resource) in the 12 time domain symbols included in the first time domain resource is equal to the second signal multiplied by a $3^{rd}$ element (namely, -1) in the mask sequence, a signal that is in the first signal and that is carried on a $4^{th}$ time domain symbol (that is, a time domain symbol corresponding to a symbol sequence number 27 in the first time domain resource) in the 12 time domain symbols included in the first time domain resource is equal to the second signal multiplied by a $4^{th}$ element (namely, -j) in the mask sequence, a signal that is in the first signal and that is carried on a $5^{th}$ time domain symbol (that is, a time domain symbol corresponding to a symbol sequence number 34 in the first time domain resource) in the 12 time domain symbols included in the first time domain resource is equal to the second signal multiplied by a $5^{th}$ element (namely, +1) in the mask sequence, ..., a signal that is in the first signal and that is carried on an $11^{th}$ time domain symbol (that is, a time domain symbol corresponding to a symbol sequence number 76 in the first time domain resource) in the 12 time domain symbols included in the first time domain resource is equal to the second signal multiplied by an $11^{th}$ element (namely, -1) in the mask sequence, and a signal that is in the first signal and that is carried on a $12^{th}$ time domain symbol (that is, a time domain symbol corresponding to a symbol sequence number 83 in the first time domain resource) in the 12 time domain symbols included in the first time domain resource is equal to the second signal multiplied by a $12^{th}$ element (namely, -j) in the mask sequence.

It should be noted that, if a scenario to which this application is applicable is the scenario shown in FIG. 2, in addition to sending the first signal on the $M$ time domain symbols, the first device may further receive a fourth signal on the $M$ time domain symbols, where the fourth signal is an echo signal of the first signal.

Optionally, if the first device further sends the second signal on the *L* time domain symbols in the second time domain resource in addition to sending the first signal on the *M* time domain symbols in the first time domain resource, the first device may further receive a fifth signal on the *L* time domain symbols in the second time domain resource in addition to receiving the fourth signal on the *M* time domain symbols, where the fifth signal is an echo signal of the second signal.

Optionally, if the first device further sends the third signal or the second signal on the second frequency domain resource and the *M* time domain symbols in the first time domain resource in addition to sending the first signal on the first frequency domain resource and the *M* time domain symbols in the first time domain resource, the first device may further receive a sixth signal on the second frequency domain resource and the *M* time domain symbols in addition to receiving the fourth signal on the *M* time domain symbols, where the sixth signal is an echo signal of the third signal or the second signal.

It may be understood that an echo signal of the fourth signal may be used for detecting a low-velocity target, and the fifth signal or the sixth signal may be used for detecting a high-velocity target. For example, processing on the fourth signal is used as an example. The first device receives the fourth signal, and performs coherent combination and sensing parameter estimation on all fourth signals received in the first time period. For example, a specific method is as follows: The first device performs matched filtering on the fourth signal based on the first signal, and performs Fourier transform on a plurality of fourth signals along a slow time dimension to obtain a range-velocity spectrum, to estimate a range from the target and a velocity of the target. Herein, the target that can be detected based on the fourth signal is a low-velocity target. Optionally, for processing on the fifth signal or the sixth signal, refer to the descriptions of the fourth signal. Details are not described herein again.

It should be noted that, if a scenario to which this application is applicable is the scenario shown in FIG. 3 or FIG. 4, in addition to sending the first signal on the *M* time domain symbols, the first device further needs to send first information to a second device. The first information indicates the second device to receive a signal based on the first information. The first information includes at least one of the following information: the first time domain resource, the first frequency domain resource, the second time domain resource, the second frequency domain resource, *i,* and *N*. Correspondingly, the second device receives the first information from the first device, and receives and decodes the first signal from the first device based on the first information.

Specifically, in an implementation, the first information includes the first time domain resource, and the first time domain resource includes the *M* time domain symbols. The first device sends the first signal on the *M* time domain symbols in the first time domain resource.

Therefore, the second device may receive the first signal on the *M* time domain symbols in the first time domain resource.

In another implementation, the first information further includes the second time domain resource. In addition to sending the first signal on the *M* time domain symbols in the first time domain resource, the first device further sends the second signal on the *L* time domain symbols in the second time domain resource. In this case, in addition to receiving the first signal on the *M* time domain symbols in the first time domain resource, the second device may further receive the second signal on the *L* time domain symbols in the second time domain resource.

In another implementation, the first information further includes the first frequency domain resource and the second frequency domain resource. In addition to sending the first signal on the first frequency domain resource and the *M* time domain symbols in the first time domain resource, the first device further sends the third signal or the second signal on the second frequency domain resource and the *M* time domain symbols in the first time domain resource. In this case, the second device may receive the first signal on the first frequency domain resource and the *M* time domain symbols in the first time domain resource, and receive a sixth signal on the second frequency domain resource and the *M* time domain symbols, where the sixth signal is an echo signal of the third signal or the second signal.

Optionally, the first information may further include *i* and *N*. Therefore, the second device may determine the mask sequence based on *i* and *N,* and further decode the received first signal based on the mask sequence, to use a decoded signal to estimate a range from a target and a velocity of the target. It may be understood that the first signal received by the second device is mainly used for detecting a low-velocity target, and the second signal or the third signal received by the second device is mainly used for detecting a high-velocity target. For a method for estimating, by the second device, the range from the target and the velocity of the target based on the received signal, refer to the foregoing related descriptions of processing the fourth signal by the first device. Details are not described herein again.

In this embodiment of this application, it is assumed that the signal sent by the first device on the *M* time domain symbols in the first time domain resource is generated based on a column *i* (

$$\boldsymbol{w}_i[n] = exp\left(j\frac{2\pi}{N}in\right)$$

, where a length of $\boldsymbol{w}_i[n]$ is *N*) in the DFT matrix, and the signal sent by the second device on the *M* time domain symbols in the first time domain resource is generated based on a column *s* (

$$\boldsymbol{w}_s[n] = exp\left(j\frac{2\pi}{N}sn\right)$$

, where a length of $\boldsymbol{w}_s[n]$ is *N*) in the DFT matrix. In this case, when the first device performs sensing, the signal (which is an interference signal for the first device) sent by the second device on the $M$ time domain symbols in the first time domain

$$\frac{2\pi}{N}(s-i)$$

resource falls at a frequency of a velocity spectrum obtained through sensing performed by the first device, corresponding to a non-zero velocity/non-low velocity. Therefore, the first device can detect the low-velocity target.

In addition, the first device sends the second signal on the $L$ time domain symbols in the second time domain resource, that is, repeatedly sends the second signal. When sensing is performed by using the echo signal, namely, the fifth signal, of the second signal, an interference signal of another device falls at a zero frequency/low frequency of a velocity spectrum, corresponding to a zero velocity/low velocity. Therefore, the first device can also detect the high-velocity target.

Optionally, when the first device sends, on the first frequency domain resource and the $M$ time domain symbols in the first time domain resource, the first signal generated based on the second signal and the mask sequence, and performs sensing by using the echo signal, namely, the fourth signal, of the first signal, an interference signal of another device falls at a non-zero frequency/non-low frequency of a velocity spectrum, corresponding to a non-zero velocity/non-low velocity. Therefore, the first device can detect the low-velocity target. In addition, the first device sends the third signal (or the second signal) on the second frequency domain resource and the $M$ time domain symbols in the first time domain resource, that is, repeatedly sends the third signal (or the second signal). When sensing is performed by using the echo signal, namely, the sixth signal, of the third signal (or the second signal), an interference signal of another device falls at a zero frequency/low frequency of a velocity spectrum, corresponding to a zero velocity/low velocity. Therefore, the first device can also detect the high-velocity target. In conclusion, the first device can detect both the low-velocity target and the high-velocity target.

The following describes in detail the communication apparatus provided in this application with reference to FIG. 12 to FIG. 15.

FIG. 12 is a diagram of a structure of a communication apparatus according to an embodiment of this application. The communication apparatus shown in FIG. 12 may be configured to perform some or all functions of the first device in the method embodiment described in FIG. 5. The apparatus may be the first device, may be an apparatus in the first device, or may be an apparatus that can be used in combination with the first device. The communication apparatus may alternatively be a chip system. The communication apparatus shown in FIG. 12 may include a transceiver unit 1201 and a determining unit 1202. The determining unit 1202 is configured to perform data processing. The transceiver unit 1201 integrates a receiving unit and a sending unit. The transceiver unit 1201 may also be referred to as a communication unit. Alternatively, the transceiver unit 1201 may be split into a receiving unit and a sending unit. The determining unit 1202 and the transceiver unit 1201 below are similar, and details are not described below again.

The determining unit 1202 is configured to determine a first time domain resource, where the first time domain resource includes $M$ time domain symbols, $M$ is an integer greater than 1, and an interval between any two of the $M$ time domain symbols is greater than or equal to one time domain symbol.

The transceiver unit 1201 is configured to send a first signal on the $M$ time domain symbols, where a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

In a possible implementation, the transceiver unit 1201 is further configured to:
send the second signal on a second time domain resource, where the first time domain resource and the second time domain resource do not overlap.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, sending a first signal on the $M$ time domain symbols includes:
sending the first signal on a first frequency domain resource and the $M$ time domain symbols.

The transceiver unit 1201 is further configured to:
send a third signal or the second signal on a second frequency domain resource and the $M$ time domain symbols.

The second frequency domain resource and the first frequency domain resource do not overlap.

In a possible implementation, the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

In a possible implementation, the column $i$ or the row $i$ includes $N$ elements, $N$ is an integer greater than 1, $N$ is greater than or equal to $M$, and $M$ elements in the mask sequence are $M$ of the $N$ elements.

In a possible implementation, in the first time domain resource, an absolute value of a difference between symbol sequence numbers of any two adjacent time domain symbols in the $M$ time domain symbols is the same. The element $a$ in the mask sequence is an element $a$ in the $N$ elements, and the element $a$ in the $N$ elements is an element whose sequence number is $a$ in the $N$ elements.

In a possible implementation, the column $i$ or the row $i$ includes $N$ elements, $N$ is an integer greater than 1, $N$ is less than $M$, $M$ elements in the mask sequence include at least two same elements, the at least two same elements are elements in the $N$ elements, and the $M$ elements include all or some of the $N$ elements.

In a possible implementation, in the first time domain resource, an absolute value of a difference between symbol sequence numbers of any two adjacent time domain symbols in the $M$ time domain symbols is the same. The column $i$ or the row $i$ includes $N$ elements, $N$ is an integer greater than 1, $N$ is less than $M$, the element $a$ in the mask sequence is an element $b$ in the $N$ elements, and the element $b$ is an element whose sequence number is $b$ in the $N$ elements; and

$$b = a \bmod N,$$

where
mod represents a modulo operation.

In a possible implementation, symbol sequence numbers of the $M$ time domain symbols in the first time domain resource belong to a first set, and the first set satisfies:

$$\mathbf{R} = \{T \times e + z \mid e \in \mathbf{S}, \mathbf{S} \subseteq \{0, 1, 2, \ldots\}\},$$

where
$\mathbf{R}$ represents the first set, T is a positive integer, a difference between symbol sequence numbers of any two of the $M$ time domain symbols in the first time domain resource is an integer multiple of T, z is an offset of a 1st time domain symbol in the $M$ time domain symbols relative to a 1st time domain symbol in the first time domain resource, $\mathbf{S}$ represents a second set, the second set is a subset of a natural number set, and a quantity of elements in the second set is $M$.

The element $a$ in the mask sequence is the element $b$ in the $N$ elements included in the column $i$ or the row $i$, and the element $b$ is the element whose sequence number is $b$ in the $N$ elements, where

$$b = U[a] \bmod N$$

U represents a first sequence, the first sequence is a sequence formed by elements in the second set in ascending order, and U[$a$] is an element whose sequence number is $a$ in the first sequence.

In a possible implementation, the first matrix is a Vandermonde matrix.

In a possible implementation, the Vandermonde matrix is a discrete Fourier transform DFT matrix.

In a possible implementation, when the first matrix is the DFT matrix, the column $i$ or the row $i$ satisfies:

$$w_i[n] = \exp\left(j\frac{2\pi}{N}in\right), n = 0, 1, 2, \ldots, N-1,$$

where
$N$ is a quantity of elements in the column $i$, and $i \in \{0, 1, 2, \ldots, N\text{-}1\}$.

In a possible implementation, $N$ is 19 or a multiple of 19;

$N$ is 3 or a multiple of 3; or
$N$ is $2^6$ or $2^r$, and r is a positive integer not equal to 6.

In a possible implementation, the transceiver unit 1201 is further configured to:

receive a fourth signal on the $M$ time domain symbols, where the fourth signal is an echo signal of the first signal;
receive a fifth signal on the second time domain resource, where the fifth signal is an echo signal of the second signal; and/or
receive a sixth signal on the second frequency domain resource and the $M$ time domain symbols, where the sixth signal is an echo signal of the third signal or the second signal.

In a possible implementation, the transceiver unit 1201 is further configured to:
send first information to a second device, where the first information indicates the second device to receive a signal based on the first information, and the first information includes at least one of the following information: the first time domain resource, the first frequency domain resource, the second time domain resource, the second frequency domain resource, $i$, and $N$.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

For another possible implementation of the communication apparatus, refer to related descriptions of functions of the first device in the method embodiment corresponding to FIG. 5. Details are not described herein again.

FIG. 13 is a diagram of a structure of another communication apparatus according to an embodiment of this application. The communication apparatus shown in FIG. 13 may be configured to perform some or all functions of the second device in the method embodiment described in FIG. 5. The apparatus may be a second device, an apparatus in the second device, or an apparatus that can be used in combination with the second device. The communication apparatus may alternatively be a chip system. The communication apparatus shown in FIG. 13 may include a transceiver unit 1301.

The transceiver unit 1301 is configured to receive first information from a first device, where the first information includes a first time domain resource, the first time domain resource includes $M$ time domain symbols, $M$ is an integer greater than 1, and an interval between any two of the $M$ time domain symbols is greater than or equal to one time domain symbol.

The transceiver unit 1301 is configured to receive a first signal on the $M$ time domain symbols, where a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

In a possible implementation, the first information further includes a second time domain resource.

The transceiver unit 1301 is further configured to:
receive the second signal on the second time domain resource, where the first time domain resource and the second time domain resource do not overlap.

In a possible implementation, the first time domain resource is in a first time period, the second time domain resource is in a second time period, the first time period and the second time period do not overlap, and both duration of the first time period and duration of the second time period are greater than or equal to duration of coherent processing time.

In a possible implementation, the first information further includes a first frequency domain resource and a second frequency domain resource.

Receiving a first signal on the $M$ time domain symbols includes:
receiving the first signal on the first frequency domain resource and the $M$ time domain symbols.

The transceiver unit 1301 is further configured to:
receive a third signal or the second signal on the second frequency domain resource and the $M$ time domain symbols.

The second frequency domain resource and the first frequency domain resource do not overlap.

In a possible implementation, the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

In a possible implementation, the column $i$ or the row $i$ includes $N$ elements, $N$ is an integer greater than 1, $N$ is greater than or equal to $M$, and $M$ elements in the mask sequence are $M$ of the $N$ elements.

In a possible implementation, in the first time domain resource, an absolute value of a difference between symbol sequence numbers of any two adjacent time domain symbols in the $M$ time domain symbols is the same. The element $a$ in the mask sequence is an element $a$ in the $N$ elements, and the element $a$ in the $N$ elements is an element whose sequence number is $a$ in the $N$ elements.

In a possible implementation, the column $i$ or the row $i$ includes $N$ elements, $N$ is an integer greater than 1, $N$ is less than $M$, $M$ elements in the mask sequence include at least two same elements, the at least two same elements are elements in the $N$ elements, and the $M$ elements include all or some of the $N$ elements.

In a possible implementation, in the first time domain resource, an absolute value of a difference between symbol sequence numbers of any two adjacent time domain symbols in the $M$ time domain symbols is the same. The column $i$ or the row $i$ includes $N$ elements, $N$ is an integer greater than 1, $N$ is less than $M$, the element $a$ in the mask sequence is an element $b$ in the $N$ elements, and the element $b$ is an element whose sequence number is $b$ in the $N$ elements; and

$$b = a \bmod N,$$

where
mod represents a modulo operation.

In a possible implementation, symbol sequence numbers of the $M$ time domain symbols in the first time domain resource belong to a first set, and the first set satisfies:

$$\mathbf{R} = \{T \times e + z \mid e \in \mathbf{S}, \mathbf{S} \subseteq \{0,1,2, \ldots\}\},$$

where
$\mathbf{R}$ represents the first set, $T$ is a positive integer, a difference between symbol sequence numbers of any two of the $M$ time domain symbols in the first time domain resource is an integer multiple of $T$, $z$ is an offset of a $1^{st}$ time domain symbol in the $M$ time domain symbols relative to a $1^{st}$ time domain symbol in the first time domain resource, $\mathbf{S}$ represents a second set, the second set is a subset of a natural number set, and a quantity of elements in the second set is $M$.

The element $a$ in the mask sequence is the element $b$ in the $N$ elements included in the column $i$ or the row $i$, and the element $b$ is the element whose sequence number is $b$ in the $N$ elements, where

$$b = \mathrm{U}[a] \bmod N$$

U represents a first sequence, the first sequence is a sequence formed by elements in the second set in ascending order, and U[a] is an element whose sequence number is a in the first sequence.

In a possible implementation, the first matrix is a Vandermonde matrix.

In a possible implementation, the first matrix is a discrete Fourier transform DFT matrix.

In a possible implementation, when the first matrix is the DFT matrix, the column i or the row i satisfies:

$$\boldsymbol{w}_i[n] = \exp\left(j\frac{2\pi}{N}in\right), n = 0,1,2,\dots,N-1,$$

where

N is a quantity of elements in the column i, and $i \in \{0, 1, 2, \dots, N\text{-}1\}$.

In a possible implementation, N is 19 or a multiple of 19;

     N is 3 or a multiple of 3; or
     N is $2^6$ or $2^r$, and r is a positive integer not equal to 6.

In a possible implementation, both the second signal and the third signal are orthogonal frequency division multiplexing OFDM signals generated based on a specific sequence, and the specific sequence may be any one of the following sequences: a Zadoff-Chu sequence (ZC sequence for short), a pseudo-random sequence, and a predefined sequence. The pseudo-random sequence includes any one of the following sequences: a longest linear feedback shift register sequence (m sequence for short) and a Gold sequence.

For another possible implementation of the communication apparatus, refer to related descriptions of functions of the second device in the method embodiment corresponding to FIG. 5. Details are not described herein again.

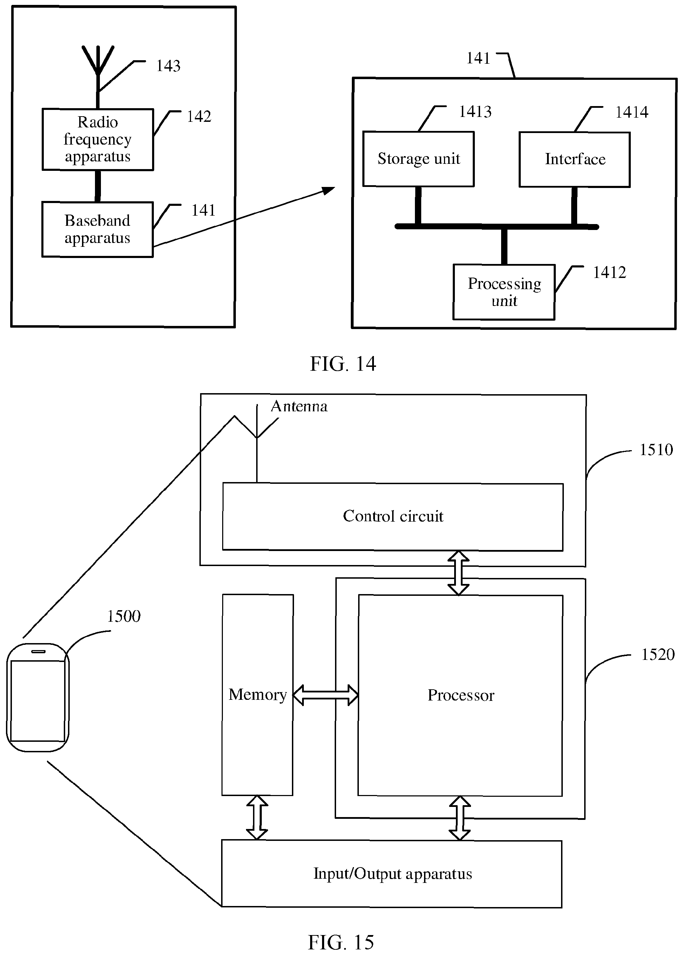

FIG. 14 is a diagram of a structure of another communication apparatus according to an embodiment of this application. As shown in FIG. 14, the communication apparatus may be the first device described in embodiments of this application, and is configured to implement functions of the first device in FIG. 5. The first device may be an access network device, or may be a terminal device. For ease of description, FIG. 14 is mainly described by using an example in which the first device is the access network device. The first device includes a baseband apparatus 141, a radio frequency apparatus 142, and an antenna 143. In an uplink direction, the radio frequency apparatus 142 receives, through the antenna 143, information sent by a terminal device, and sends, to the baseband apparatus 141 for processing, the information sent by the terminal device. In a downlink direction, the baseband apparatus 141 processes the information of the terminal device, and sends the information to the radio frequency apparatus 142. The radio frequency apparatus 142 processes the information of the terminal device, and then sends the information to the terminal device through the antenna 143.

The baseband apparatus 141 includes one or more processing units 1412, a storage unit 1413, and an interface 1414. The processing unit 1412 is configured to support the network device in performing functions of the network device in the foregoing method embodiment. The storage unit 1413 is configured to store a software program and/or data. The interface 1414 is configured to exchange information with the radio frequency apparatus 142. The interface includes an interface circuit, configured to input and output information. In an implementation, the processing unit is an integrated circuit, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of such integrated circuits. These integrated circuits may be integrated together to form a chip. The storage unit 1413 and the processing unit 1412 may be located in a same chip, that is, an on-chip storage element. Alternatively, the storage unit 1413 may be located on a different chip from the processing unit 1412, that is, an off-chip storage element. The storage unit 1413 may be a memory, or may be a collective term of a plurality of memories or storage elements.

The first device may implement some or all of the steps in the foregoing method embodiments in a form of scheduling programs by using one or more processing units. For example, corresponding functions of the network device in FIG. 5 are implemented. The one or more processing units may support radio access technologies of a same standard, or may support radio access technologies of different standards.

FIG. 15 is a diagram of a structure of another communication apparatus according to an embodiment of this application. As shown in FIG. 15, the communication apparatus may be the second device described in embodiments of this application, and is configured to implement functions of the second device in FIG. 5. The second device may be an access network device, or may be a terminal device. For ease of description, FIG. 15 shows only main components of a terminal device 1500. As shown in FIG. 15, the terminal device 1500 includes a processor, a memory, a control circuit, an antenna, and an input/output apparatus. The processor is mainly configured to: process a communication protocol and communication data, control the entire terminal device 1500, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

That the terminal device 1500 is a mobile phone is used as an example. After the terminal device 1500 is powered on, the processor may read the software program in the storage unit, interpret and execute instructions of the software program, and process the data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in the form of the electromagnetic wave through the antenna. When data is sent to the terminal device 1500, the control circuit receives a radio frequency signal through the antenna, converts the radio frequency signal into a baseband signal, and outputs the baseband signal to the processor. The processor converts the baseband signal into data and processes the data.

A person skilled in the art may understand that for ease of description, FIG. 15 shows only one memory and one processor. In some embodiments, the terminal device 1500 may include a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device 1500, execute the software program, and process the data of the software program. Functions of the baseband processor and the central processing unit are integrated into the processor in FIG. 15. A person skilled in the art may understand that the baseband processor and the central processing unit may be independent processors, and are interconnected by using a technology such as a bus. The terminal device 1500 may include a plurality of baseband processors to adapt to different network standards. The terminal device 1500 may include a plurality of central processing units to enhance a processing capability of the terminal device 1500. Components of the terminal device 1500 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1510 of the terminal device 1500, and the processor having a processing function may be considered as a processing unit 1520 of the terminal device 1500. As shown in FIG. 15, the terminal device 1500 includes the transceiver unit 1510 and the processing unit 1520. The transceiver unit may also be referred to as a transceiver, a transceiver machine, a transceiver apparatus, or the like. Optionally, a component configured to implement a receiving function in the transceiver unit 1510 may be considered as a receiving unit, and a component configured to implement a sending function in the transceiver unit 1510 may be considered as a sending unit. That is, the transceiver unit 1510 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions in this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a magnetic disk storage medium, another magnetic storage device, or any other medium that can be used to carry or store expected program code in a form of an instruction or a data structure and that can be accessed by a computer. In addition, by way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, comprising:

   determining, by a first device, a first time domain resource, wherein the first time domain resource comprises $M$ time domain symbols, $M$ is an integer greater than 1, and an interval between any two of the $M$ time domain symbols is greater than or equal to one time domain symbol; and
   sending, by the first device, a first signal on the $M$ time domain symbols, wherein a signal that is in the first signal and that is located on a time domain symbol $a$ is a product of a second signal and an element $a$ in a mask sequence, a length of the mask sequence is $M$, the time domain symbol $a$ is a symbol whose sequence number is $a$ in the $M$ time domain symbols, the element $a$ in the mask sequence is an element whose sequence number is $a$ in the mask sequence, and $a$ is an integer greater than or equal to 0 and less than $M$.

2. The method according to claim 1, wherein the method further comprises:
   sending, by the first device, the second signal on a second time domain resource, wherein the first time domain resource and the second time domain resource do not overlap.

3. The method according to claim 1, wherein the sending, by the first device, a first signal on the $M$ time domain symbols comprises:

   sending, by the first device, the first signal on a first frequency domain resource and the $M$ time domain symbols; and
   the method further comprises:

      sending, by the first device, a third signal or the second signal on a second frequency domain resource and the $M$ time domain symbols, wherein
      the second frequency domain resource and the first frequency domain resource do not overlap.

4. The method according to any one of claims 1 to 3, wherein the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

5. The method according to claim 4, wherein the column $i$ or the row $i$ comprises $N$ elements, $N$ is an integer greater than 1, $N$ is greater than or equal to $M$,

and *M* elements in the mask sequence are *M* of the *N* elements.

6. The method according to claim 5, wherein the element *a* in the mask sequence is an element *a* in the *N* elements, and the element *a* in the *N* elements is an element whose sequence number is *a* in the *N* elements.

7. The method according to claim 4, wherein the column *i* or the row *i* comprises *N* elements, *N* is an integer greater than 1, *N* is less than *M*, *M* elements in the mask sequence comprise at least two same elements, the at least two same elements are elements in the *N* elements, and the *M* elements comprise all or some of the *N* elements.

8. The method according to claim 7, wherein the column *i* or the row *i* comprises *N* elements, *N* is an integer greater than 1, *N* is less than *M*, the element *a* in the mask sequence is an element *b* in the *N* elements, and the element *b* is an element whose sequence number is *b* in the *N* elements; and

$$b = a \bmod N,$$

wherein
mod represents a modulo operation.

9. The method according to any one of claims 4 to 8, wherein the first matrix is a Vandermonde matrix.

10. The method according to claim 9, wherein the Vandermonde matrix is a discrete Fourier transform DFT matrix.

11. The method according to any one of claims 4 to 10, wherein the column *i* or the row *i* satisfies:

$$\boldsymbol{w}_i[n] = \exp\left(j\frac{2\pi}{N}in\right), n = 0,1,2,\ldots,N-1,$$

wherein
*N* is a quantity of elements in the column *i*, and *i* ∈ {0, 1, 2, ..., *N-1}*.

12. The method according to any one of claims 5 to 11, wherein

*N* is 19 or a multiple of 19;
*N* is 3 or a multiple of 3; or
*N* is $2^6$ or $2^r$, and r is a positive integer not equal to 6.

13. The method according to any one of claims 1 to 12, wherein the method further comprises:

receiving, by the first device, a fourth signal on the *M* time domain symbols, wherein the fourth signal is an echo signal of the first signal;
receiving, by the first device, a fifth signal on the second time domain resource, wherein the fifth signal is an echo signal of the second signal; and/or
receiving, by the first device, a sixth signal on the second frequency domain resource and the *M* time domain symbols, wherein the sixth signal is an echo signal of the third signal or the second signal.

14. The method according to any one of claims 1 to 13, wherein the method further comprises:
sending, by the first device, first information to a second device, wherein the first information indicates the second device to receive a signal based on the first information, and the first information comprises at least one of the following information: the first time domain resource, the first frequency domain resource, the second time domain resource, the second frequency domain resource, *i*, and *N*.

15. The method according to any one of claims 1 to 14, wherein the second signal is an orthogonal frequency division multiplexing OFDM signal generated based on a specific sequence, and the specific sequence may be any one of the following sequences: a Zadoff-Chu sequence, a pseudo-random sequence, and a predefined sequence.

16. A communication method, comprising:

receiving, by a second device, first information from a first device, wherein the first information comprises a first time domain resource, the first time domain resource comprises *M* time domain symbols, *M* is an integer greater than 1, and an interval between any two of the *M* time domain symbols is greater than or equal to one time domain symbol; and
receiving, by the second device, a first signal on the *M* time domain symbols, wherein a signal that is in the first signal and that is located on a time domain symbol *a* is a product of a second signal and an element *a* in a mask sequence, a length of the mask sequence is *M*, the time domain symbol *a* is a symbol whose sequence number is *a* in the *M* time domain symbols, the element *a* in the mask sequence is an element whose sequence number is *a* in the mask sequence, and *a* is an integer greater than or equal to 0 and less than *M*.

17. The method according to claim 16, wherein the first information further comprises a second time domain resource; and

the method further comprises:
receiving, by the second device, the second signal on the second time domain resource, wherein the first time domain resource and the second time domain resource do not overlap.

18. The method according to claim 16, wherein the first information further comprises a first frequency domain resource and a second frequency domain resource;
the receiving, by the second device, a first signal on the $M$ time domain symbols comprises:

receiving, by the second device, the first signal on the first frequency domain resource and the $M$ time domain symbols; and
the method further comprises:

receiving, by the second device, a third signal or the second signal on the second frequency domain resource and the $M$ time domain symbols, wherein
the second frequency domain resource and the first frequency domain resource do not overlap.

19. The method according to any one of claims 16 to 18, wherein the mask sequence is determined based on a column $i$ or a row $i$ in a first matrix, $i$ is an integer greater than or equal to 0, the column $i$ is a column whose sequence number is $i$ in the first matrix, and the row $i$ is a row whose sequence number is $i$ in the first matrix.

20. The method according to claim 19, wherein the column $i$ or the row $i$ comprises $N$ elements, $N$ is an integer greater than 1, $N$ is greater than or equal to $M$, and $M$ elements in the mask sequence are $M$ of the $N$ elements.

21. The method according to claim 20, wherein the element $a$ in the mask sequence is an element $a$ in the $N$ elements, and the element $a$ in the $N$ elements is an element whose sequence number is $a$ in the $N$ elements.

22. The method according to claim 19, wherein the column $i$ or the row $i$ comprises $N$ elements, $N$ is an integer greater than 1, $N$ is less than $M$, $M$ elements in the mask sequence comprise at least two same elements, the at least two same elements are elements in the $N$ elements, and the $M$ elements comprise all or some of the $N$ elements.

23. The method according to claim 22, wherein the column $i$ or the row $i$ comprises $N$ elements, $N$ is an integer greater than 1, $N$ is less than $M$, the element $a$ in the mask sequence is an element $b$

in the $N$ elements, and the element $b$ is an element whose sequence number is $b$ in the $N$ elements; and

$$b=a \bmod N,$$

wherein
mod represents a modulo operation.

24. The method according to any one of claims 19 to 23, wherein the first matrix is a discrete Fourier transform DFT matrix.

25. The method according to any one of claims 19 to 24, wherein the column $i$ or the row $i$ satisfies:

$$\boldsymbol{w}_i[n] = \exp\left(j\frac{2\pi}{N}in\right), n = 0,1,2,\dots,N-1,$$

wherein
$N$ is a quantity of elements in the column $i$, and $i \in \{0, 1, 2, \dots, N\text{-}1\}$.

26. The method according to any one of claims 20 to 25, wherein

$N$ is 19 or a multiple of 19;
$N$ is 3 or a multiple of 3; or
$N$ is $2^6$ or $2^r$, and $r$ is a positive integer not equal to 6.

27. A communication apparatus, comprising a unit or a module configured to perform the method according to any one of claims 1 to 15, or comprising a unit or a module configured to perform the method according to any one of claims 16 to 26.

28. A communication apparatus, comprising:

one or more processors and one or more memories, wherein
the one or more memories are configured to store a computer program, and the one or more processors are configured to execute the computer program stored in the one or more memories, to enable the communication apparatus to perform the method according to any one of claims 1 to 15, or perform the method according to any one of claims 16 to 26.

29. A computer-readable storage medium, wherein the storage medium stores a computer program or instructions, and when the computer program or the instructions are executed by a computer, the method according to any one of claims 1 to 15 or the method according to any one of claims 16 to 26 is implemented.

**EP 4 564 950 A1**

**30.** A computer program product, comprising computer program code, wherein when the computer program code is run on a computer, the method according to any one of claims 1 to 15 or the method according to any one of claims 16 to 26 is implemented.

FIG. 1

Access network
device A

Sensing
signal

Reflected
signal

Target

(a)

Access network
device A

Communication

Reflected
signal

Sensing
signal

Communication
device

Target

(b)

FIG. 2

EP 4 564 950 A1

Access network device A — Sensing signal — Reflected signal — Access network device B — Target

(a)

Access network device A — Communication — Communication device — Sensing signal — Reflected signal — Target — Access network device B

(b)

FIG. 3

EP 4 564 950 A1

FIG. 4

A first device determines a first time domain resource — S501

The first device sends a first signal on $M$ time domain symbols — S502

FIG. 5

FIG. 6

FIG. 7

Column $i$ in a first matrix: $\exp\left(j\frac{2\pi}{4}1n\right) = [+1, +j, -1, -j]$

Mask sequence: +1 +j −1 −j +1 +j −1          −1 −j +1 +j −1 −j +1

First signal

Sequence numbers of time domain symbols: 6 13 20 27 34 41 48          76 83 90 97 104 111 118

First time domain resource

FIG. 8a

Column $i$ in a first matrix: $\exp\left(j\frac{2\pi}{4}1n\right) = [+1, +j, -1, -j]$

Mask sequence: +1 +j −1     +1 +j −1          −1 −j +1     −1 −j +1

First signal

Sequence numbers of time domain symbols: 5 12 19     33 40 47          75 82 89     103 110 117

First time domain resource

FIG. 8b

Column $i$ in a first matrix: $\exp\left(j\frac{2\pi}{4}1n\right) = [+1, +j, -1, -j]$

Mask sequence: +1     +j     −1     −j     +1     +j     −1     −j     +1     +j     −1     −j

First signal

Sequence numbers of time domain symbols: 6     13     20     27     34     41     48     55     62     69     76     83

First time domain resource

FIG. 9

Column $i$ in a first matrix: $\exp\left(j\frac{2\pi}{4}1n\right) = [+1, +j, -1, -j]$

FIG. 10

Column $i$ in a first matrix: $\exp\left(j\frac{2\pi}{4}1n\right) = [+1, +j, -1, -j]$

Mask sequence: +1  +j  −1  −j  +1  +j  −1  −j  +1  +j  −1  −j

First frequency domain resource

First signal

Second frequency domain resource

Second signal

+1  +1  +1  +1  +1  +1  +1  +1  +1  +1  +1  +1  →Equivalent to no mask

Sequence numbers of time domain symbols:  6  13  20  27  34  41  48  55  62  69  76  83

First time domain resource

FIG. 11

Transceiver unit                    1201

Determining unit                    1202

Communication apparatus

FIG. 12

Transceiver unit                    1301

Communication apparatus

FIG. 13

143

142

Radio
frequency
apparatus

141

Baseband
apparatus

141

1413

1414

Storage unit

Interface

1412

Processing
unit

FIG. 14

Antenna

1510

Control circuit

1500

1520

Memory

Processor

Input/Output apparatus

FIG. 15

## INTERNATIONAL SEARCH REPORT

| International application No. |
| --- |
| **PCT/CN2023/103350** |

**A. CLASSIFICATION OF SUBJECT MATTER**

H04W 72/00(2023.01)i

According to International Patent Classification (IPC) or to both national classification and IPC

**B. FIELDS SEARCHED**

Minimum documentation searched (classification system followed by classification symbols)

IPC： H04W

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 感知, 回波, 反射, 信号, 干扰, 低速, 零速, 时域, 时隙, 符号, 间隔, 掩码, 序列, 乘, 积, 交织, 矩阵, symbol, sequence, mask, gap, time, domain, low, speed, interfer+, signal, reflect+, multip+, space, sens+, interval, matrix

**C. DOCUMENTS CONSIDERED TO BE RELEVANT**

| Category* | Citation of document, with indication, where appropriate, of the relevant passages | Relevant to claim No. |
| --- | --- | --- |
| A | CN 110412557 A (BEIJING UNIVERSITY OF POSTS AND TELECOMMUNICATIONS) 05 November 2019 (2019-11-05) description, paragraphs 8-25 | 1-30 |
| A | CN 107483166 A (SHANGHAI LANGBO COMMUNICATION TECHNOLOGY CO., LTD.) 15 December 2017 (2017-12-15) entire document | 1-30 |
| A | US 2021076367 A1 (HUAWEI TECHNOLOGIES CO., LTD.) 11 March 2021 (2021-03-11) entire document | 1-30 |
| A | WO 2019137536 A1 (HUAWEI TECHNOLOGIES CO., LTD.) 18 July 2019 (2019-07-18) entire document | 1-30 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 September 2023** | **27 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103350**

| Patent document cited in search report | | | Publication date (day/month/year) | Patent family member(s) | | | Publication date (day/month/year) |
|---|---|---|---|---|---|---|---|
| CN | 110412557 | A | 05 November 2019 | None | | | |
| CN | 107483166 | A | 15 December 2017 | None | | | |
| US | 2021076367 | A1 | 11 March 2021 | WO | 2021047279 | A1 | 18 March 2021 |
| | | | | EP | 4022351 | A1 | 06 July 2022 |
| | | | | CN | 114402222 | A | 26 April 2022 |
| WO | 2019137536 | A1 | 18 July 2019 | CN | 110035444 | A | 19 July 2019 |

Form PCT/ISA/210 (patent family annex) (July 2022)

**REFERENCES CITED IN THE DESCRIPTION**

**Patent documents cited in the description**

- CN 202210970213